(19) Europäisches Patentamt
European Patent Office
Office européen des brevets

(11) **EP 3 657 620 B1**

(12) **EUROPEAN PATENT SPECIFICATION**

(45) Date of publication and mention
of the grant of the patent:
**18.08.2021   Bulletin 2021/33**

(51) Int Cl.:
***H02H 9/08*** *(2006.01)*

(21) Application number: **18207528.3**

(22) Date of filing: **21.11.2018**

(54) **METHOD AND APPARATUS FOR CONTROLLING ARC SUPPRESSION DEVICE**

VERFAHREN UND VORRICHTUNG ZUR STEUERUNG EINER
LICHTBOGENUNTERDRÜCKUNGSVORRICHTUNG

PROCÉDÉ ET APPAREIL DE CONTRÔLE D'UN DISPOSITIF DE SUPPRESSION D'ARC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2020   Bulletin 2020/22**

(73) Proprietor: **ABB Schweiz AG**
**5400 Baden (CH)**

(72) Inventors:
• **Altonen, Janne**
  **33720 Tampere (FI)**
• **Wahlroos, Ari**
  **65320 Vaasa (FI)**
• **Leminen, Janne**
  **33720 Tampere (FI)**

(74) Representative: **Kolster Oy Ab**
**(Salmisaarenaukio 1)**
**P.O. Box 204**
**00181 Helsinki (FI)**

(56) References cited:
**EP-A1- 1 870 717      WO-A1-2016/029890
WO-A2-96/34293**

**Description**

FIELD OF THE INVENTION

The present invention relates to a method and an apparatus for controlling an arc suppression device.

BACKGROUND OF THE INVENTION

An arc suppression device can be used for compensating a fault current caused by a single-phase-to-earth fault. An example of an arc suppression device is an Arc Suppression Coil, ASC, which is a passive inductive device that is connected between a neutral point of an electric system and earth to limit the capacitive earth-fault current flowing, when a single-phase-to-earth fault occurs in the system. The ASC was originally developed by Waldemar Petersen and may therefore also be referred to as the Petersen Coil. This kind of system earthing method is called as the resonant earthing. The resonant earthing is the prevailing earthing practice globally in medium voltage networks, and it has been used in several countries for many decades with good operational experiences. An example of the ASC is disclosed in US 1537371, EP1870717, WO2016/029890 and WO96/34293.
The idea of the resonant earthing is to match, either essentially completely or at least partially, the admittance of the arc suppression device to the total phase-to-earth capacitance formed by the network conductors. In this case the magnitude of the earth-fault current at the fault location can be limited below the level of self-extinguishment, which can suppress transient earth faults without a feeder tripping. Also, the touch and hazard voltages can be limited with the decreased fault current value, which also limits the danger to public and property, and improves safety to personnel.
In order to set the admittance value of the arc suppression device to match the total phase-to-earth capacitance of the network conductors, at least an inductance, provided by e.g. one or more adjustable coils, of the arc suppression device may be variable and a controller device (e.g. a coil controller) can be used. The purpose of such a controller device is to adjust, i.e. tune, the arc suppression device admittance to match the total phase-to-earth capacitance value of the network. The controller device can continuously monitor the network's phase-to-earth capacitance value. If the phase-to-earth capacitance value of the network changes, then the controller device may adjust the admittance of the arc suppression device correspondingly.
Examples of tuning principles of continuously variable arc suppression coils include: 1. Search of max $|U_{NE}|$: This algorithm searches the maximum of the residual voltage. 2. Least square based on $|1/U_{NE}|$: A lower sensitivity against disturbances can be reached by using an algorithm based on the inverse of the resonance curve. 3. Locus Diagram of $U_0$. This method is based on the fact that a circle on the complex Uo plane can be constructed with only three known points. This method assumes that the third point of the circle is the origin of the complex plane. A short detuning can be achieved by switching a capacitor in parallel to the Petersen Coil, for example. The detuning results in a second point of the locus diagram of $U_{NE}$. Measuring the voltage Uo with amplitude and angle it is then possible to construct the resonance curve. Document Druml, G., Kugi, A., Parr, B.: 'Control of Petersen Coils', XI. International Symposium on Theoretical Electrical Engineering, August 2001, Linz, Austria, discloses examples of such tuning principles.
A problem related to the existing solutions for adjusting an arc suppression device is that the speed and/or accuracy thereof might not be sufficient.

BRIEF DESCRIPTION OF THE INVENTION

An object of the present invention is thus to provide a method and an apparatus for implementing the method so as to overcome the above problems or at least to alleviate them or to provide an alternative solution. The objects of the invention are achieved by a method, a computer program product, an apparatus, and an arc suppression device, which are characterized by what is stated in the independent claims. The preferred embodiments of the invention are disclosed in the dependent claims.
The invention is based on the idea of determining a symmetrical network admittance, which represents a sum of symmetrical phase-to-earth admittances of a three phase electric network, and an asymmetry admittance, which represents an asymmetry of phase-to-earth admittances of the three phase electric network concentrated into one phase, on the basis of two values of a zero-sequence voltage of the three phase electric network and two values of the admittance of the arc suppression device, and adjusting the arc suppression device on the basis of the determined symmetrical network admittance and the determined asymmetry admittance.
An advantage of the invention is that an arc suppression device can be adjusted fast and with good accuracy.

BRIEF DESCRIPTION OF THE DRAWINGS

In the following the invention will be described in greater detail by means of preferred embodiments with reference to the accompanying drawings, in which

Figure 1 is an example of a three phase electric network illustrating an embodiment;
Figure 2 is a phasor diagram according to an embodiment; and
Figure 3 is a flow diagram according to an embodiment.

DETAILED DESCRIPTION OF THE INVENTION

The application of the various embodiments described herein is not limited to any specific system, but it can be used in connection with various three-phase electric networks with a compensated neutral, also known as resonant earthed networks, where compensation of the fault current may be achieved by installing one or more arc suppression devices (Petersen coils) into neutral point(s) of the network. The electric network, in which the various embodiments may be implemented, can be an electric power transmission or distribution network or a component thereof, for example, and may comprise several electric lines or sections. The electric network may have a radial configuration supplied from one point thereof or a loop configuration comprising one or more loops and supplied from two or more points, for instance. Moreover, the use of the various embodiments is not limited to systems employing 50 Hz or 60 Hz fundamental frequencies or to any specific voltage level.

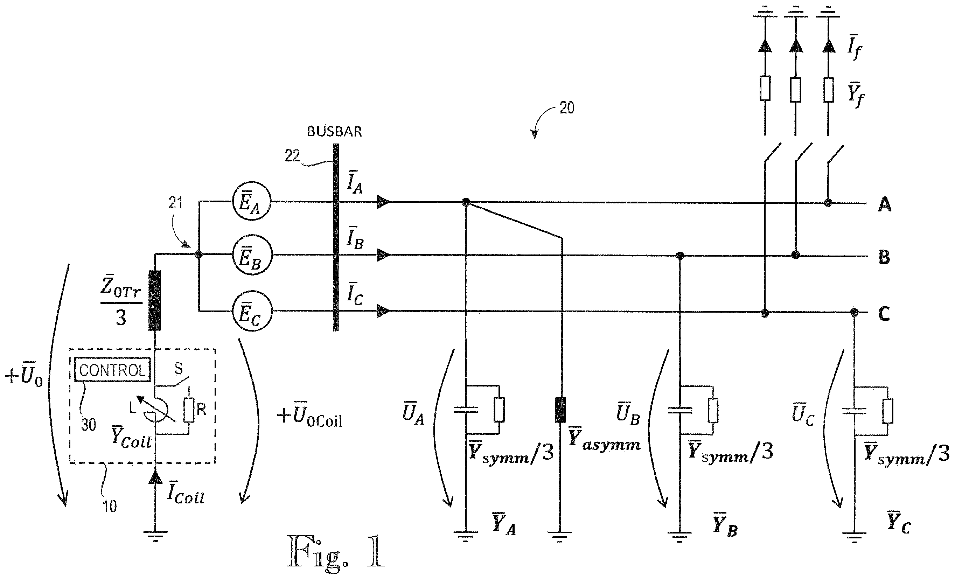

Figure 1 is diagram illustrating a simplified equivalent circuit of a three-phase electric network 20 in which the various embodiments can be applied. The exemplary figure only shows components necessary for understanding the various embodiments. The exemplary three-phase network 20 with phases A, B and C may be a medium voltage (e.g. 20 kV) distribution network fed through a substation comprising a source $\overline{E}_A, \overline{E}_B, \overline{E}_C$, such as a transformer or generally a feeding point of the electric network 20, and a busbar 22 connected to one or more electric line outlets, e.g. feeders. Respective phase currents of phases A, B and C are $\overline{I}_A, \overline{I}_B,$ and $\overline{I}_C,$ with a positive current direction from the busbar towards line as indicated by the arrows, and the phase voltages are $\overline{U}_A, \overline{U}_B,$ and $\overline{U}_C.$ Figure 1 further illustrates an arc suppression device 10, which is connected between a neutral point 21 of the three phase electric network 20 and earth. The arc suppression device 10 can be connected to the neutral point 21 of the network 20 via an earthing transformer or any other suitable arrangement, for example. An admittance of the arc suppression device 10 is $\overline{Y}_{Coil}$ and the exemplary arc suppression device 10 as illustrated comprises one adjustable coil L and a resistor R which can be connected in parallel to the coil L with an associated switch S. The arc suppression device 10 could comprise more than one adjustable and/or non-adjustable coils, and more than one resistors, for instance. $\overline{I}_{Coil}$ is the current flowing through the arc suppression device 10.

Current and voltage values used in the various embodiments may be obtained by a suitable measuring arrangement including e.g. current and voltage transducers (not shown in the figures) connected to the phases of the electric network 20. Voltage and current quantities may also be measured at different locations, for instance. In existing electric networks and systems, such values are typically readily available and thus the implementation of the various embodiments does not necessarily require any separate or additional measuring arrangements. A phase-to-earth fault, e.g. a single phase-to-earth fault, in the electric network 20 and the corresponding faulted phase A, B, or C of the electric network 20 may be detected by a protective relay or similar apparatus associated with the electric network 20. Such a protective relay could be located in connection with or at least connected to the feeding busbar 22 of the electric network 20 in the example of Figure 1, for example.

The figure also shows a control arrangement 30, such as a controller device or a control unit of the arc suppression device 10, located within the arc suppression device 10. Such a control arrangement 30 could also be located outside the arc suppression device 10 and could be configured to control more than one arc suppression devices 10, for example. In the exemplary system of Figure 1, at least part of the functionality of the various embodiments may be located in the control arrangement 30, for example. The control arrangement 30 may be configured to receive necessary measurement data and/or perform at least some measurements by itself, and to control, i.e. tune, the adjustable coil L. The control arrangement 30 may also be configured to control on/off the switch S of the parallel resistor R of the arc suppression device 10, for instance.

The following notation is used in Figure 1:

$\overline{E}_A$ is the phase A to earth voltage of the source (fundamental frequency phasor)
$\overline{E}_B$ is the phase B to earth voltage of the source (fundamental frequency phasor)
$\overline{E}_C$ is the phase C to earth voltage of the source (fundamental frequency phasor)

$\overline{U}_A$ is the phase A to earth voltage at busbar (fundamental frequency phasor) = $(\overline{E}_A + \overline{U}_0)$

$\overline{U}_B$ is the phase B to earth voltage at busbar (fundamental frequency phasor) = $(\overline{E}_B + \overline{U}_0)$

$\overline{U}_C$ is the phase C to earth voltage at busbar (fundamental frequency phasor) = $(\overline{E}_C + \overline{U}_0)$

$\overline{U}_0$ is the zero-sequence voltage of the electric network = $(\overline{U}_A + \overline{U}_B + \overline{U}_C)/3$ (fundamental frequency phasor) which can be measured e.g. at the busbar $\overline{U}_{0Coil}$ is the voltage over the arc suppression device

$\overline{I}_A$ is the phase A current at the source (fundamental frequency phasor)

$\overline{I}_B$ is the phase B current at the source (fundamental frequency phasor)

$\overline{I}_C$ is the phase C current at the source (fundamental frequency phasor)

$\overline{I}_{Coil}$ is the current through the arc suppression device (fundamental frequency phasor)

$\overline{Y}_A$ is the phase A to earth admittance of the electric network = $\overline{Y}_{symm}/3 + \overline{Y}_{asymm}$

$\overline{Y}_B$ is the phase B to earth admittance of the electric network = $\overline{Y}_{symm}/3$

$\overline{Y}_C$ is the phase C to earth admittance of the electric network = $\overline{Y}_{symm}/3$

$\overline{Y}_{Coil}$ is the admittance of the arc suppression device (including the possible parallel resistor R)

$\overline{Z}_{0Tr}$ is the zero-sequence impedance between the arc suppression device and the neutral point of the three phase electric network (e.g. the zero-sequence impedance of an earthing transformer through which the arc suppression device is connected to the neutral point):

$$\overline{Z}_{0Tr} = R_{0Tr} + j \times X_{0Tr}$$

where

$R_{0Tr}$ is the zero-sequence resistance between the arc suppression device and the neutral point of the three phase electric network

$X_{0Tr}$ is the zero-sequence reactance between the arc suppression device and the neutral point of the three phase electric network

The following assumptions can be made:

- The real network is presented with their shunt admittances neglecting line series impedances as their values are very small compared with the shunt admittances. Further, the loads and phase-to-phase capacitances of the real system are disregarded as they do not contribute to the zero-sequence phenomena

- The individual phase admittances of the total network admittance are presented with symmetrical phase admittances, whose sum equals the symmetrical network admittance:

$$\overline{Y}_{symm} = G_{symm} + j \cdot B_{symm}$$

(one third in each phase)
Parameter $G_{symm}$ is the real part of the symmetrical network admittance. The sign is positive and it represents the shunt losses of the network (excluding the losses of the arc suppression device). In case there are distributed compensation coils in the network, their shunt losses are included in this value. Parameter $B_{symm}$ is the imaginary part of the symmetrical network admittance. The sign is positive (capacitive) and it represents the capacitive uncompensated earth-fault current of the network. In case there are distributed compensation coils in the network, their effect is included in this value.

- The natural asymmetry present in a real system is due to differences in individual phase admittances and it has thus in practice an arbitrary value. It is presented with an asymmetry admittance concentrated into phase A and presented with the asymmetry admittance:

$$\overline{Y}_{asymm} = G_{asymm} + j \cdot B_{asymm}$$

(only in phase A)
The asymmetry admittance $\overline{Y}_{asymm} = G_{asymm} + j \cdot B_{asymm}$ represents the asymmetry of the phase-to-earth admittances of the network reduced to a lumped admittance in phase A. Parameter $G_{asymm}$ is the real part of asymmetry admittance. The sign may be positive or negative depending on the actual level of asymmetry. Parameter $B_{asymm}$ is the imaginary part of asymmetry admittance. The sign may be positive or negative depending on the actual level of asymmetry i.e. on the differencies between the actual phase to earth admittances of the network.

- A single-phase earth fault in the network is presented with admittance $\overline{Y}_f = G_f + j \cdot B_f$. As fault impedance can be assumed to be essentially purely resistive (fault resistance $R_f$), thus:

$$\overline{Y}_f \cong G_f = 1/R_f,$$

which is connected between phase A, B or C and earth depending on the faulted phase. Fault current is $\overline{I}_f$.

- The zero-sequence impedance of the earthing or main transformer, or another arrangement, via which the arc suppression device is connected to a neutral point is represented with impedance $\overline{Z}_{0Tr} = R_{0Tr} + j \cdot X_{0Tr}$ (in a three-phase equivalent scheme, one third should be applied between the neutral and earth).

- The admittance of the arc suppression device including the possible parallel resistor is presented with admittance $\overline{Y}_{Coil} = G_{Coil} + j \cdot B_{Coil}$, where $G_{Coil}$ is the real part of the admittance. The sign is positive and it represents the resistive losses of the arc suppression device including the parallel resistor, if applied. $B_{Coil}$ is the imaginary part of the arc suppression device admittance. The sign is negative (inductive) and it represents the inductive current of the arc suppression device, which defines the compensation degree of the network. Note that the signs of $B_{Coil}$ and $B_{symm}$ are opposite, $B_{Coil}$ is negative (inductive) and $B_{symm}$ is positive (capacitive).

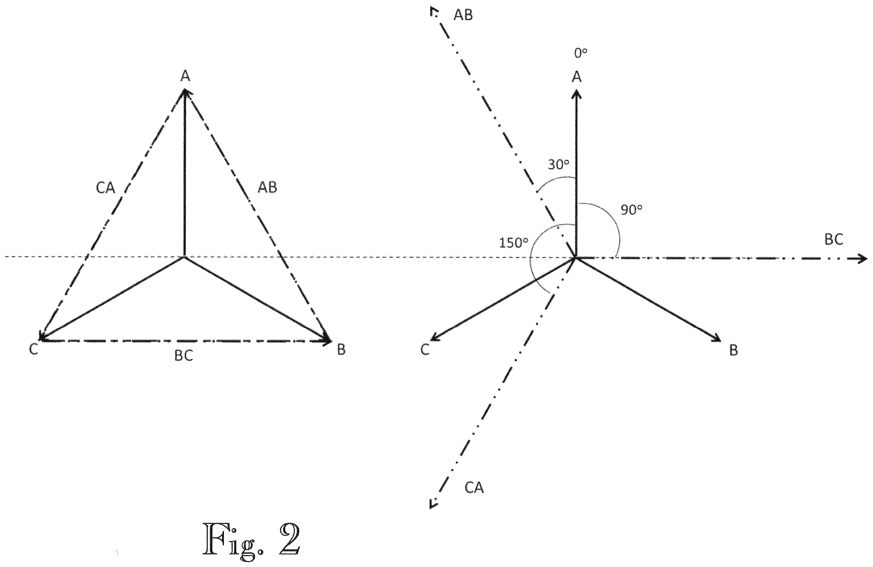

It should be noted, that if phase A is taken as a reference, it is mandatory that the measured quantities (zero-sequence voltage $\overline{U}_0$ or $\overline{U}_{0Coil}$ and current $\overline{I}_{Coil}$) utilized in the various embodiments are referenced to this phase i.e. to phase A with phase angle of 0 degrees. It should be also noted that phase A is selected as the reference merely as an example but phase B or phase C could be equivalently selected as the reference instead. A-B-C phase rotation is assumed in the examples. Further, it is advantageous to use a phase-to-phase voltage (AB, BC or CA) as a reference as phase-to-phase voltages remain unaffected also during single-phase earth faults. Phase referencing may be achieved by taking the phase-to-phase voltage, e.g. $\overline{U}_{AB} = \overline{U}_A - \overline{U}_B$ and turning its phase angle to match the phase angle of phase A: for example, when using phase-to-phase voltage $\overline{U}_{AB}$ it should be turned by 30 degrees as illustrated in Figure 2, which shows a phasor diagram according to an embodiment. The phase angle of $\overline{U}_0$, $\overline{U}_{0Coil}$ and $\overline{I}_{Coil}$ phasors can then all be referenced to this phasor.

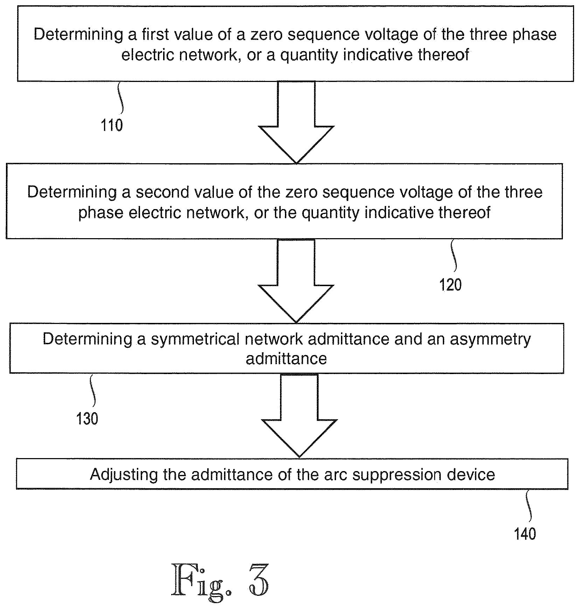

Figure 3 shows a flow diagram according to an embodiment. According to an embodiment, the arc suppression device 10 of the three phase electric network 20 can be controlled as follows. A first value of the zero-sequence voltage of the three phase electric network, or of a quantity indicative of the zero-sequence voltage, is determined 110, when the admittance of the arc suppression device 10 has a first value. A second value of the zero-sequence voltage of the three phase electric network, or of the quantity indicative of the zero-sequence voltage, is determined 120, when the admittance of the arc suppression device has a second value. Then, a symmetrical network admittance, which represents a sum of symmetrical phase-to-earth admittances of the three phase electric network, and an asymmetry admittance, which represents an asymmetry of phase-to-earth admittances of the three phase electric network concentrated into one phase, can be determined 130 on the basis of the determined first and second values of the zero-sequence voltage of the three phase electric network, or of the quantity indicative of the zero-sequence voltage, and the first and second values of the admittance of the arc suppression device. The admittance of the arc suppression device 10 can be adjusted 140 on the basis of the determined symmetrical network admittance and the determined asymmetry admittance.

According to an embodiment, adjusting the arc suppression device 10 admittance (e.g. including tuning at least one coil L thereof) can be implemented by utilizing two values for the arc suppression device admittance $\overline{Y}_{Coil1}$, $\overline{Y}_{Coil2}$, which correspond to two values of the zero-sequence voltage $\overline{U}_{01}$, $\overline{U}_{02}$, or a quantity indicative thereof. For these two conditions, two equations describing the zero-sequence voltage as a function of arc suppression device admittance can be written. From these equations, two unknown admittances, the symmetrical network admittance, $\overline{Y}_{symm} = G_{symm} + j \cdot B_{symm}$, representing the network size, and the asymmetry admittance, $\overline{Y}_{asymm} = G_{asymm} + j \cdot B_{asymm}$, representing the network asymmetry can be solved. After the parameters $\overline{Y}_{asymm}$ and $\overline{Y}_{symm}$ have been solved, a resonance point of the electric network can be determined. According to an embodiment, it can be achieved, when during a healthy state of the electric network 20, i.e. no earth-fault has been detected, the susceptance of the arc suppression device is adjusted to a value:

$$B_{coil\_res} = -\cfrac{1}{\cfrac{1}{B_{symm} + B_{asymm}} - \cfrac{X_{0Tr}}{3}} \qquad (1a)$$

According to an embodiment, Eq. 1a can also be written phase-specifically, which enables the tuning procedure to be done, or further completed, according to a faulted phase during an earth fault in the electric network 20. A benefit of this is that a more accurate compensation result of the earth-fault current can be achieved if compared to the tuning result based on Eq. 1a during the healthy state of the electric network 20. This is especially valid if the natural unbalance of the electric network 20 is high, for instance. According to an embodiment, the phase-specific equations for the susceptance of the coil in the resonance point of the network can be written as:

Phase A-to-earth fault:

$$B_{coil\_resA} = -\cfrac{1}{\cfrac{1}{B_{symm}} - \cfrac{X_{0Tr}}{3}} \qquad (1b)$$

Phase B-to-earth fault:

$$B_{coil\_resB} = -\cfrac{1}{\cfrac{1}{B_{symm} + 1.5 \cdot B_{asymm} - \cfrac{\sqrt{3}}{2} \cdot G_{asymm}} - \cfrac{X_{0Tr}}{3}} \qquad (1c)$$

Phase C-to-earth fault:

$$B_{coil\_resC} = -\cfrac{1}{\cfrac{1}{B_{symm} + 1.5 \cdot B_{asymm} + \cfrac{\sqrt{3}}{2} \cdot G_{asymm}} - \cfrac{X_{0Tr}}{3}} \qquad (1d)$$

The phase-specific resonance point is achieved when during the faulty state of the network the susceptance of the coil is adjusted to a value, which is given by Eq. 1b, 1c or 1d. It should be noted that this embodiment requires that the earth fault is detected and the faulted phase is identified first.

From the above equations 1a to 1d the susceptance of the coil of the arc suppression device 10 can be obtained when a target value for the coil tuning is the resonance condition of the network. This may the preferred condition especially if phase-specific coil tuning is performed during the faulty state of the electric network 20, for example. If other target values, i.e. a detuning of the coil L resulting in under- or overcompensation, are desired or required, susceptance value of the coil corresponding to the desired degree of detuning can also be obtained on the basis of these equations, for instance.

According to an embodiment, the symmetrical network admittance, $\overline{Y}_{symm} = G_{symm} + j \cdot B_{symm}$, representing the network size, and the asymmetry admittance, $\overline{Y}_{asymm} = G_{asymm} + j \cdot B_{asymm}$, representing the network asymmetry can be solved during a healthy state of the electric network 20 (an earth-fault is not detected, $\underline{Y}_F = 0$) or during a faulty state of the electric network (an earth-fault is detected). According to an embodiment, based on the equivalent circuit of Figure 1, two different equations describing the zero-sequence voltage of the electric network 20, or a quantity indicative thereof, during a healthy state thereof can be derived as follows. An example of a quantity indicative of the zero-sequence voltage $\overline{U}_0$ of the electric network 20 is the voltage $\overline{U}_{0Coil}$ over the arc suppression device; $\overline{U}_0 = \overline{U}_{0Coil}*(1 + \overline{Y}coil*\overline{Z}_{0Tr}/3)$.

a. In case the zero-sequence voltage of the electric network 20 is determined (measurement $\overline{U}_0$ may be obtained from an open-delta connected tertiary windings of phase-to-earth voltage transformers or by calculating the sum of phase to earth voltages as: $\overline{U}_0 = (\overline{U}_A + \overline{U}_B + \overline{U}_C)/3$), then from the equivalent circuit of Figure 1 the general equation for the zero-sequence voltage $\overline{U}_0$ equals:

$$\overline{U}_0 = -U_{PE} \cdot \frac{\left(\overline{Y}_{Coil} \cdot \overline{Z}_{0Tr} + 3\right) \cdot \overline{Y}_{asymm}}{\left(\overline{Y}_{Coil} \cdot \overline{Z}_{0Tr} + 3\right) \cdot \left(\overline{Y}_{symm} + \overline{Y}_{asymm}\right) + 3 \cdot \overline{Y}_{Coil}} \qquad (2a)$$

b. In case the voltage $\overline{U}_{0Coil}$ over the arc suppression device is determined (measurement $\overline{U}_{0Coil}$ may be obtained from an integrated VT of the coil L, for instance), then from the equivalent circuit of Figure 1 the general equation for voltage $\overline{U}_{0Coil}$ over the arc suppression device equals:

$$\overline{U}_{0coil} = -U_{PE} \cdot \frac{3 \cdot \overline{Y}_{asymm}}{\left(\overline{Y}_{Coil} \cdot \overline{Z}_{0Tr} + 3\right) \cdot \left(\overline{Y}_{symm} + \overline{Y}_{asymm}\right) + 3 \cdot \overline{Y}_{Coil}} \qquad (2b)$$

In Eq. 2a and 2b, $U_{PE}$ is the phase-to-earth voltage (a measured value or a predefined value) of the electric network 20.

According to an embodiment, the admittance of the arc suppression device 10 can be changed (between steps 110 and 120) from the first value $\overline{Y}_{Coil1}$, to the second value $\overline{Y}_{Coil2}$ e.g. by changing an inductance and/or resistance of the arc suppression device 10. In practice the arc suppression device admittance change can be achieved by changing the coil L tuning degree (this results in changing the coil inductance and coil losses), or by changing the switching state of switch S of the parallel resistor R (this results in changing only the real part of the admittance). The latter method can be performed very quickly, just switching the switch S on-off or vice versa, and there is no need to change the coil L position if the change in the zero-sequence voltage due to the resistor switching is adequate for the calculations. This enables a very fast calculation of the network parameters without time-consuming driving of the coil L position up or down. The change of the admittance of the arc suppression device 10 results in a respective change of the zero-sequence voltage of the electric network from value $\overline{U}_{01}$ to $\overline{U}_{02}$, and the voltage over the arc suppression device from $\overline{U}_{0Coil1}$ to $\overline{U}_{0Coil2}$.

According to an embodiment, utilizing Eq. 2a and 2b, the two unknown parameters $\overline{Y}_{asymm}$ and $\overline{Y}_{symm}$ can be solved as follows:

In case the zero-sequence voltage is determined:

$$\overline{Y}_{asymm} = \frac{A_1}{A_2 + A_3 + A_4 + A_5}, \qquad (3a)$$

where

$$A_1 = 9 \cdot \overline{U}_{01} \cdot \overline{U}_{02} \cdot (\overline{Y}_{Coil1} - \overline{Y}_{Coil2})$$

$$A_2 = U_{PE} \cdot (3 \cdot \overline{U}_{01} \cdot \overline{Y}_{Coil2} \cdot \overline{Z}_{0Tr} + 9 \cdot \overline{U}_{01} + \overline{U}_{01} \cdot \overline{Y}_{Coil1} \cdot \overline{Y}_{Coil2} \cdot \overline{Z}_{0Tr}^{2})$$

$$A_3 = 3 \cdot U_{PE} \cdot \overline{U}_{01} \cdot \overline{Y}_{Coil1} \cdot \overline{Z}_{0Tr}$$

$$A_4 = U_{PE} \cdot (-3 \cdot \overline{U}_{02} \cdot \overline{Y}_{Coil1} \cdot \overline{Z}_{0Tr} - 9 \cdot \overline{U}_{02} - \overline{U}_{02} \cdot \overline{Y}_{Coil1} \cdot \overline{Y}_{Coil2} \cdot \overline{Z}_{0Tr}^{2})$$

$$A_5 = -3 \cdot U_{PE} \cdot \overline{U}_{02} \cdot \overline{Y}_{Coil2} \cdot \overline{Z}_{0Tr}$$

$$\bar{Y}_{symm=}\frac{B_1+B_2+B_3+B_4+B_5}{B_6 \cdot B_7} \, , \tag{3b}$$

where

$$B_1 = -3 \cdot U_{PE} \cdot \overline{U}_{01} \cdot \overline{Y}_{Coil1} \cdot \overline{Y}_{Coil2} \cdot \bar{Z}_{0Tr}$$

$$B_2 = 3 \cdot U_{PE} \cdot \overline{U}_{02} \cdot \overline{Y}_{Coil1} \cdot \overline{Y}_{Coil2} \cdot \bar{Z}_{0Tr}$$

$$B_3 = -3 \cdot (3 \cdot \overline{U}_{01} \cdot \overline{U}_{02} \cdot \overline{Y}_{Coil1} + 3 \cdot U_{PE} \cdot \overline{U}_{01} \cdot \overline{Y}_{Coil1})$$

$$B_4 = 9 \cdot \overline{U}_{01} \cdot \overline{U}_{02} \cdot \overline{Y}_{Coil2}$$

$$B_5 = 9 \cdot U_{PE} \cdot \overline{U}_{02} \cdot \overline{Y}_{Coil2}$$

$$B_6 = U_{PE} \cdot (\overline{Y}_{Coil1} \cdot \bar{Z}_{0Tr} + 3)$$

$$B_7 = \overline{U}_{01} \cdot \overline{Y}_{Coil2} \cdot \bar{Z}_{0Tr} - \overline{U}_{02} \cdot \overline{Y}_{Coil2} \cdot \bar{Z}_{0Tr} + 3 \cdot \overline{U}_{01} - 3 \cdot \overline{U}_{02},$$

where

$\overline{U}_{01}$ is the first value of the zero-sequence voltage
$\overline{U}_{02}$ is the second value of the zero-sequence voltage
$\overline{Y}_{Coil1}$ is the first value of the admittance of the arc suppression device
$\overline{Y}_{Coil2}$ is the second value of the admittance of the arc suppression device.

In case the voltage over the arc suppression device is determined:

$$\bar{Y}_{asymm=}\frac{C_1}{C_2+C_3} \, , \tag{4a}$$

where

$$C_1 = 3 \cdot \overline{U}_{0Coil1} \cdot \overline{U}_{0Coil2} \cdot (\overline{Y}_{Coil1} - \overline{Y}_{Coil2})$$

$$C_2 = U_{PE} \cdot (3 \cdot \overline{U}_{0Coil1} + \overline{U}_{0Coil1} \cdot \overline{Y}_{Coil1} \cdot \bar{Z}_{0Tr})$$

$$C_3 = U_{PE} \cdot (-3 \cdot \overline{U}_{0Coil2} - \overline{U}_{0Coil2} \cdot \overline{Y}_{Coil2} \cdot \bar{Z}_{0Tr})$$

$$\bar{Y}_{symm=}\frac{D_1+D_2+D_3}{D_4+D_5} \, , \tag{4b}$$

where

$$D_1 = -3 \cdot (\overline{U}_{0Coil1} \cdot \overline{U}_{0Coil2} \cdot \overline{Y}_{Coil1} + U_{PE} \cdot \overline{U}_{0Coil1} \cdot \overline{Y}_{Coil1})$$

$$D_2 = 3 \cdot \overline{U}_{0Coil1} \cdot \overline{U}_{0Coil2} \cdot \overline{Y}_{Coil2}$$

$$D_3 = 3 \cdot U_{PE} \cdot \overline{U}_{0Coil2} \cdot \overline{Y}_{Coil2}$$

$$D_4 = U_{PE} \cdot (3 \cdot \overline{U}_{0Coil1} + \overline{U}_{0Coil1} \cdot \overline{Y}_{Coil1} \cdot \overline{Z}_{0Tr})$$

$$D_5 = U_{PE} \cdot (-3 \cdot \overline{U}_{0Coil2} - \overline{U}_{0Coil2} \cdot \overline{Y}_{Coil2} \cdot \overline{Z}_{0Tr})$$

where

$\overline{U}_{0Coil1}$ is the first value of the voltage over the arc suppression device
$\overline{U}_{0Coil2}$ is the second value of the voltage over the arc suppression device
$\overline{Y}_{Coil1}$ is the first value of the admittance of the arc suppression device
$\overline{Y}_{Coil2}$ is the second value of the admittance of the arc suppression device.

The numerical values of Eq. 3a and 4a match each other, as well as the numerical values of Eq. 3b and 4b, respectively.

Once the values of parameters $\overline{Y}_{asymm}$ and $\overline{Y}_{symm}$ have been solved, they can be stored to a memory for later use. Such a memory may be located within or at least in connection with the control arrangement 10, for example, or in a separate location. The determination of the values of parameters $\overline{Y}_{asymm}$ and $\overline{Y}_{symm}$, i.e. steps 110, 120 and 130, may be repeated, if e.g. the switching state of the electric network 20 changes or any other change takes place such that an updating of the values of parameters $\overline{Y}_{asymm}$ and $\overline{Y}_{symm}$ is required.

According to an embodiment, the adjusting 140 of the admittance of the arc suppression device 10 on the basis of the determined symmetrical network admittance and the determined asymmetry admittance comprises adjusting the admittance of the arc suppression device to a value that provides a predetermined degree of compensation. The predetermined degree of compensation to be provided for a particular electric network, such as essentially fully compensated (100% compensation degree, i.e. a total capacitive earth fault current of the electric network would be compensated), undercompensated (<100% compensation degree) or overcompensated (>100% compensation degree), may depend on characteristics of the particular electric network in question and/or the earth-fault protection scheme thereof, for example.

According to an embodiment, the adjusting 140 of the admittance of the arc suppression device 10 is performed on the basis of an imaginary part $B_{symm}$ of the determined symmetrical network admittance and an imaginary part $B_{asymm}$ of the determined asymmetry admittance. According to an embodiment, the adjusting 140 of the admittance of the arc suppression device 10 on the basis of the imaginary part of the determined symmetrical network admittance and the imaginary part of the determined asymmetry admittance may be performed on the basis of the following equation, which gives the value of the imaginary part of the arc suppression device admittance, i.e. susceptance of the arc suppression device, at which the resonance point of the electric network is achieved:

$$B_{coil\_res} = -\frac{1}{\dfrac{1}{B_{symm} + B_{asymm}} - \dfrac{X_{0Tr}}{3}} = 3 \cdot \left( \frac{B_{symm} + B_{asymm}}{\left( B_{symm} + B_{asymm} \right) \cdot X_{0Tr} - 3} \right) \quad (5a)$$

In case $X_{0Tr} = 0$ then $B_{coil\_res} = -(B_{symm} + B_{asymm})$.

Corresponding arc suppression device current value in amperes can be obtained when the susceptance is multiplied with the electric network phase-to-earth voltage value $U_{PE}$:

$$I_{coil\_res} = abs(B_{coil\_res}) \cdot U_{PE} \quad (5b)$$

At the resonance point the zero-sequence voltage $\overline{U}_0$ reaches its maximum value, while a fault current at a fault location during an earth-fault fault reaches its minimum value.

According to an embodiment, other detuning or compensation degree values can be achieved as follows: When a detuning setting value is given as amperes with setting $v_{set}$ [A]:

$$I_{coil\_set}$$

$$= v_{set} + I_{coil\_res} - I_{fix}$$

$$= v_{set} + abs\left(-\cfrac{1}{\cfrac{1}{\left(B_{symm} + B_{asymm}\right)} - \cfrac{X_{0Tr}}{3}}\right) \cdot U_{PE} - I_{fix}$$

$$= v_{set} + 3 \cdot abs\left(\frac{B_{symm} + B_{asymm}}{\left(B_{symm} \cdot + B_{asymm}\right) \cdot X_{0Tr} - 3}\right) \cdot U_{PE} - I_{fix} \qquad (6a)$$

When the detuning setting value is given as a relative detuning with setting $v_{set}$ [pu], where 1pu equals the resonance condition:

$$I_{coil\_set}$$

$$= abs\left(-\cfrac{1}{\cfrac{1}{\left(B_{symm} + B_{asymm}\right) \cdot (1 + v_{set})} - \cfrac{X_{0Tr}}{3}}\right) \cdot U_{PE} - I_{fix}$$

$$= 3 \cdot abs\left(\frac{\left(B_{symm} + B_{asymm}\right) \cdot (1 + v_{set})}{\left(B_{symm} + B_{asymm}\right) \cdot X_{0Tr} \cdot (1 + v_{set}) - 3}\right) \cdot U_{PE} - I_{fix} \qquad (6b)$$

When the detuning setting value is given as a compensation degree with setting $K_{set}$ [%], where 100% equals the resonance condition:

$$I_{coil\_set}$$

$$= abs\left(-\cfrac{1}{\cfrac{1}{\left(B_{symm} + B_{asymm}\right) \cdot \cfrac{K_{set}}{100}} - \cfrac{X_{0Tr}}{3}}\right) \cdot U_{PE} - I_{fix}$$

$$= 3 \cdot abs\left(\frac{\left(B_{symm} + B_{asymm}\right) \cdot K_{set}}{\left(B_{symm} + B_{asymm}\right) \cdot K_{set} \cdot X_{0Tr} - 300}\right) \cdot U_{PE} - I_{fix} \qquad (6c)$$

where
$I_{coil\_set}$ is the determined target value of the arc suppression device current [A] for the tuning action, i.e. the coil L of the arc suppression device should be adjusted to a position such that the arc suppression device current value matches this value

$I_{fix}$ is a set current value [A] of fixed arc suppression coil(s) in the electric network, if any.

According to another embodiment, the values for the arc suppression device admittance $\overline{Y}_{Coil} = G_{Coil} + j \cdot B_{Coil}$ at coil L position $n$ required in Eq. 3a, 3b and 4a, 4b can be obtained by direct measurements utilizing the arc suppression device current measurement and zero-sequence voltage measurement.

In case the zero-sequence voltage is determined:

$$G_{Coil1} = real\left(\frac{-3 \cdot \overline{I}_{Coil1}}{3 \cdot \overline{U}_{01} + \overline{I}_{Coil1} \cdot \overline{Z}_{0Tr}}\right) \qquad \text{arc suppression device conductance at coil}$$

position 1 (7a)

$$B_{Coil1} = imag\left(\frac{-3 \cdot \overline{I}_{Coil1}}{3 \cdot \overline{U}_{01} + \overline{I}_{Coil1} \cdot \overline{Z}_{0Tr}}\right) \qquad \text{arc suppression device susceptance at coil}$$

position 1 (7b)

$$G_{Coil2} = real\left(\frac{-3 \cdot \overline{I}_{Coil2}}{3 \cdot \overline{U}_{02} + \overline{I}_{Coil2} \cdot \overline{Z}_{0Tr}}\right) \qquad \text{arc suppression device conductance at coil}$$

position 2 (7c)

$$B_{Coil2} = imag\left(\frac{-3 \cdot \overline{I}_{Coil2}}{3 \cdot \overline{U}_{02} + \overline{I}_{Coil2} \cdot \overline{Z}_{0Tr}}\right) \qquad \text{arc suppression device susceptance at coil}$$

position 2 (7d)

In case the voltage over the arc suppression device is determined:

$$G_{Coil1} = real\left(\frac{-\overline{I}_{Coil1}}{\overline{U}_{0Coil1}}\right) \qquad \text{arc suppression device conductance at coil}$$

position 1 (8a)

$$B_{Coil1} = imag\left(\frac{-\overline{I}_{Coil1}}{\overline{U}_{0Coil1}}\right) \qquad \text{arc suppression device susceptance at coil}$$

position 1 (8b)

$$G_{Coil2} = real\left(\frac{-\overline{I}_{Coil2}}{\overline{U}_{0Coil2}}\right)$$ arc suppression device conductance at coil

position 2 (8c)

$$B_{Coil2} = imag\left(\frac{-\overline{I}_{Coil2}}{\overline{U}_{0Coil2}}\right)$$ arc suppression device susceptance at coil

position 2 (8d)

With the polarities defined in Figure 1 the sign of $B_{coil}$ is negative (inductive) and $G_{coil}$ is positive (resistive).

In Eq. 7 and 8, the following notations are used:

$\overline{I}_{Coiln}$ is the measured coil current (fundamental frequency phasor) at coil position $n$

$\overline{U}_{0n}$ is the measured zero-sequence voltage measured at busbar (fundamental frequency phasor) at coil position $n$

$\overline{U}_{0Coiln}$ is the measured zero-sequence voltage measured at coil (fundamental frequency phasor) at coil position $n$

This embodiment requires both arc suppression device current measurement and zero-sequence voltage measurement (refer to Figure 1). For the measurement conventional CTs, VTs or sensors can be used, for example.

According to another embodiment, the values for the arc suppression device admittance $\overline{Y}_{Coil} = G_{Coil} + j \cdot B_{Coil}$ at coil L position $n$ required in Eq. 3a, 3b and 4a, 4b can be obtained from a coil position indicator of the arc suppression device. This may be a potentiometer value in ohms, for instance. Coil positions can be converted to arc suppression device current values based on a predetermined conversion table or function, for example. This embodiment requires only the coil position indication and conversion functionality from the potentiometer value (resistance) to actual arc suppression device current.

$$B_{coil1} = \frac{-I_{Coil1x}}{UPE_{Coil}}$$ arc suppression device susceptance at coil position 1

(9a)

$$B_{coil2} = \frac{-I_{Coil2x}}{UPE_{Coil}}$$ arc suppression device susceptance at coil position 2

(9b)

where

$I_{Coil1x}$ is the arc suppression device current corresponding to coil position 1 based on potentiometer value and $I_{Coil2x}$ is the arc suppression device current corresponding to coil position 2 based on potentiometer value.

$UPE_{Coil}$ is the rated voltage value of the arc suppression device.

The real-part of the arc suppression device admittance ($G_{Coil}$) at coil position $n$ can be estimated from the arc suppression device current at coil position $n$ with a certain constant per unit share, denoted with parameter $rx_{coil}$ [0...1pu]:

$$G_{Coil1} = abs(B_{Coil1}) \cdot rx_{coil} + G_{parallel} \times status$$ (9c)

$$G_{Coil2} = abs(B_{Coil2}) \cdot rx_{coil} + G_{parallel} \times status$$ (9d)

In this embodiment, the connection status (*status* = 0 (off) or 1 (on)) of the switch S of the parallel resistor R of the arc suppression device must be known and in case it is connected, its value ($G_{parallel}$) must be included in $G_{Coil}$ value.

Based on the polarities defined in Figure 1, conductance $G_{Coil}$ should be positive and it represents the resistive part of the arc suppression device admittance i.e. shunt losses of the arc suppression device (including the parallel resistor R). This information can be utilized to verify that the connection status indication of the parallel resistor is valid. If not, an alarm may be given, for example.

Based on the polarities defined in Figure 1, the susceptance $B_{Coil}$ should be negative and it represents the reactive part of the arc suppression device admittance i.e. inductive current, which defines the compensation degree of the electric network.

According to an embodiment, the adjusting 140 of the admittance of the arc suppression device 10 on the basis of the determined symmetrical network admittance and the determined asymmetry admittance may be performed during an earth fault in electric network 20. This embodiment enables the adjusting 140 of the admittance of the arc suppression device 10 additionally based on the faulted phase such that an earth-fault current at a fault location can be better controlled taking into account the fact that the earth-fault current magnitude is dependent on the faulted phase due to a network asymmetry. This embodiment is particularly applicable in cases where the earth-fault protection of the electric network is used in an alarming mode, for example. Such adjusting of the admittance of the arc suppression device 10 performed during a single-phase earth-fault may be performed alternatively or additionally to the adjusting of the admittance of the arc suppression device during a healthy state of the electric network. Same inputs and measurements may be utilized as in the embodiments described earlier. Parameters $\overline{Y}_{symm} = G_{symm} + j \cdot B_{symm}$, and $\overline{Y}_{asymm} = G_{asymm} + j \cdot B_{asymm}$ required by Eq.10 and 11 can be solved and stored during a healthy state (earth fault not detected) or solved during a faulty state (earth fault detected) according to the embodiments described earlier, for example. Stored values of parameters $\overline{Y}_{symm}$ and $\overline{Y}_{asymm}$ may be used in particular if the network topology does not change during the faulty state of the electric network, e.g. during a fault location, isolation and supply restoration process. Alternatively, the network parameters $\overline{Y}_{symm}$ and $\overline{Y}_{asymm}$ may be re-calculated during the faulty state of the electric network before the adjusting 140 of the admittance of the arc suppression device 10. This approach can be used if the network topology changes essentially during the fault and enables that the fault current can be better controlled regardless of possible network topology changes.

According to an embodiment, the adjusting 140 of the admittance of the arc suppression device 10 on the basis of the determined symmetrical network admittance and the determined asymmetry admittance during a single-phase earth fault may be performed on the basis of the following equations, which give the values of the imaginary part of the arc suppression device admittance at which the resonance point of the electric network is achieved depending on the faulted phase of the electric network 20.

The phase-specific equations for values of the imaginary part of the arc suppression device admittance and the corresponding arc suppression device current at the resonance point are as follows:

Phase A-to-earth fault:

$$B_{Coil\_resA} = -\frac{1}{\dfrac{1}{B_{symm}} - \dfrac{X_{0Tr}}{3}} \qquad (10a)$$

Corresponding arc suppression device current value:

$$I_{Coil\_resA} = abs\left( -\frac{1}{\dfrac{1}{B_{symm}} - \dfrac{X_{0Tr}}{3}} \right) \cdot UPE$$

Phase B-to-earth fault:

$$B_{Coil\_resB} = -\frac{1}{\dfrac{1}{B_{symm} + \dfrac{3}{2} \cdot B_{asymm} - \dfrac{\sqrt{3}}{2} \cdot G_{asymm}} - \dfrac{X_{0Tr}}{3}} \qquad (10b)$$

Corresponding arc suppression device current value:

$$I_{Coil\_resB} = abs\left(-\cfrac{1}{\cfrac{1}{B_{symm} + \frac{3}{2} \cdot B_{asymm} - \frac{\sqrt{3}}{2} \cdot G_{asymm}} - \cfrac{X_{0Tr}}{3}}\right) \cdot UPE$$

Phase C-to-earth fault:

$$B_{Coil\_resC} = -\cfrac{1}{\cfrac{1}{B_{symm} + \frac{3}{2} \cdot B_{asymm} + \frac{\sqrt{3}}{2} \cdot G_{asymm}} - \cfrac{X_{0Tr}}{3}} \qquad (10c)$$

Corresponding arc suppression device current value:

$$I_{Coil\_resC} = abs\left(-\cfrac{1}{\cfrac{1}{B_{symm} + \frac{3}{2} \cdot B_{asymm} + \frac{\sqrt{3}}{2} \cdot G_{asymm}} - \cfrac{X_{0Tr}}{3}}\right) \cdot UPE$$

According to an embodiment, other detuning or compensation degree values can be achieved as follows: When a detuning setting value is given as amperes with setting $v_{set}$ [A]:

Phase A-to-earth fault:

$$I_{coil\_setA}$$

$$= v_{set} + I_{coil\_resA} - I_{fix}$$

$$= v_{set} + abs\left(-\cfrac{1}{\cfrac{1}{B_{symm}} - \cfrac{X_{0Tr}}{3}}\right) \cdot U_{PE} - I_{fix}$$

$$= v_{set} + 3 \cdot abs\left(\cfrac{B_{symm}}{B_{symm} \cdot X_{0Tr} - 3}\right) \cdot U_{PE} - I_{fix} \qquad (11a)$$

Phase B-to-earth fault:

$$I_{coil\_setB}$$

$$= v_{set} + I_{coil\_resB} - I_{fix}$$

$$= v_{set} + abs\left(-\cfrac{1}{\cfrac{1}{B_{symm} + \cfrac{3}{2} \cdot B_{asymm} - \cfrac{\sqrt{3}}{2} \cdot G_{asymm}} - \cfrac{X_{0Tr}}{3}}\right) \cdot U_{PE} - I_{fix}$$

$$= v_{set} + 3 \cdot abs\left(\cfrac{2 \cdot B_{symm} + 3 \cdot B_{asymm} - \sqrt{3} \cdot G_{asymm}}{\left(2 \cdot B_{symm} + 3 \cdot B_{asymm} - \sqrt{3} \cdot G_{asymm}\right) \cdot X_{0Tr} - 6}\right) \cdot U_{PE} - I_{fix} \qquad (11b)$$

Phase C-to-earth fault:

$$I_{coil\_setC}$$

$$= v_{set} + I_{coil\_resC} - I_{fix}$$

$$= v_{set} + abs\left(-\cfrac{1}{\cfrac{1}{B_{symm} + \cfrac{3}{2} \cdot B_{asymm} + \cfrac{\sqrt{3}}{2} \cdot G_{asymm}} - \cfrac{X_{0Tr}}{3}}\right) \cdot U_{PE} - I_{fix}$$

$$= v_{set} + 3 \cdot abs\left(\cfrac{2 \cdot B_{symm} + 3 \cdot B_{asymm} + \sqrt{3} \cdot G_{asymm}}{\left(2 \cdot B_{symm} + 3 \cdot B_{asymm} + \sqrt{3} \cdot G_{asymm}\right) \cdot X_{0Tr} - 6}\right) \cdot U_{PE} - I_{fix} \qquad (11c)$$

When the detuning setting value is given as a relative detuning with setting $v_{set}$ [pu], where 1pu equals the resonance condition:

Phase A-to-earth fault:

$$I_{coil\_setA}$$

$$= abs\left(-\cfrac{1}{\cfrac{1}{\left(B_{symm}\right) \cdot (1 + v_{set})} - \cfrac{X_{0Tr}}{3}}\right) \cdot U_{PE} - I_{fix} \qquad (11d)$$

Phase B-to-earth fault:

$$I_{coil\_setB}$$

$$= abs\left( -\cfrac{1}{\cfrac{1}{\left(B_{symm} + \dfrac{3}{2} \cdot B_{asymm} - \dfrac{\sqrt{3}}{2} \cdot G_{asymm}\right) \cdot (1 + v_{set})} - \dfrac{X_{0Tr}}{3}} \right) \cdot U_{PE} - I_{fix} \qquad (11e)$$

Phase C-to-earth fault:

$$I_{coil\_setB}$$

$$= abs\left( -\cfrac{1}{\cfrac{1}{\left(B_{symm} + \dfrac{3}{2} \cdot B_{asymm} + \dfrac{\sqrt{3}}{2} \cdot G_{asymm}\right) \cdot (1 + v_{set})} - \dfrac{X_{0Tr}}{3}} \right) \cdot U_{PE} - I_{fix} \qquad (11f)$$

When the detuning setting value is given as a compensation degree with setting *Kset* [%], where 100% equals the resonance condition:

Phase A-to-earth fault:

$$I_{coil\_setA}$$

$$= abs\left( -\cfrac{1}{\cfrac{1}{\left(B_{symm}\right) \cdot \dfrac{K_{set}}{100}} - \dfrac{X_{0Tr}}{3}} \right) \cdot U_{PE} - I_{fix} \qquad (11g)$$

Phase B-to-earth fault:

$$I_{coil\_setB}$$

$$= abs\left(-\cfrac{1}{\cfrac{1}{\left(B_{symm} + \cfrac{3}{2} \cdot B_{asymm} - \cfrac{\sqrt{3}}{2} \cdot G_{asymm}\right) \cdot \cfrac{K_{set}}{100}} - \cfrac{X_{0Tr}}{3}} \cdot U_{PE} - I_{fix}\right) \qquad (11h)$$

Phase C-to-earth fault:

$$I_{coil\_setC}$$

$$= abs\left(-\cfrac{1}{\cfrac{1}{\left(B_{symm} + \cfrac{3}{2} \cdot B_{asymm} + \cfrac{\sqrt{3}}{2} \cdot G_{asymm}\right) \cdot \cfrac{K_{set}}{100}} - \cfrac{X_{0Tr}}{3}} \cdot U_{PE} - I_{fix}\right) \qquad (11i)$$

The adjusting 140 of the admittance of the arc suppression device 10 may be performed more than once using stored values of parameters $\overline{Y}_{asymm}$ and $\overline{Y}_{Symm}$. In other words, step 140 may be repeated one or more times using a previously stored values of parameters $\overline{Y}_{asymm}$ and $\overline{Y}_{symm}$ without repeating the determination of the values of parameters $\overline{Y}_{asymm}$ and $\overline{Y}_{symm}$, i.e. steps 110, 120 and 130, every time.

An apparatus according to any one of the above embodiments, or a combination thereof, may be implemented as a single unit or as two or more units that are configured to implement the functionality of the various embodiments. Here the term 'unit' refers generally to a physical or logical entity, such as a physical device or a part thereof or a software routine. One or more of these units may reside in the control arrangement 30, for example.

An apparatus for implementing the functionality according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control or other data. It is also possible to use a specific integrated circuit or circuits, or discrete electric components and devices for implementing the functionality according to any one of the embodiments.

The invention can be implemented in existing system elements, such as various arc suppression devices or similar devices, or by using separate dedicated elements or devices in a centralized or distributed manner. Present arc suppression devices for electric networks may comprise processors and memory that may be utilized in the functions according to the various embodiments described herein. Thus, all modifications and configurations required for implementing an embodiment in existing electric system components, may be performed as software routines, which may be implemented as added or updated software routines. If at least part of the functionality of the invention is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

**Claims**

1.  A method for controlling an arc suppression device of a three phase electric network, the arc suppression device (10) having an adjustable admittance and being connected between a neutral point (21) of the three phase electric network (20) and earth; the method comprising:

    a) determining (110) a first value of a zero-sequence voltage of the three phase electric network (20), or of a quantity indicative of the zero-sequence voltage, when an admittance of the arc suppression device (10) has a first value;
    b) determining (120) a second value of the zero-sequence voltage of the three phase electric network (20), or of the quantity indicative of the zero-sequence voltage, when the admittance of the arc suppression device (10) has a second value;
    c) determining (130) a symmetrical network admittance, which represents a sum of symmetrical phase-to-earth admittances of the three phase electric network (20), and an asymmetry admittance, which represents an asymmetry of phase-to-earth admittances of the three phase electric network (20) concentrated into one phase, on the basis of the determined first and second values of the zero-sequence voltage of the three phase electric network (20), or of the quantity indicative of the zero-sequence voltage, and the first and second values of the admittance of the arc suppression device (10); and
    d) adjusting (140) the admittance of the arc suppression device (10) on the basis of the determined symmetrical network admittance and the determined asymmetry admittance.

2.  A method as claimed in claim 1, comprising changing, between steps a) and b), the admittance of the arc suppression device (10) from the first value to the second value the by changing an inductance and/or resistance of the arc suppression device (10).

3.  A method as claimed in claim 1 or 2, wherein step c) comprises determining the symmetrical network admittance $\overline{Y}_{symm}$ and the asymmetry admittance $\overline{Y}_{asymm}$ according to the following equations:

$$\overline{Y}_{asymm} = \frac{A_1}{A_2 + A_3 + A_4 + A_5} \, ,$$

where

$$A_1 = 9 \cdot \overline{U}_{01} \cdot \overline{U}_{02} \cdot (\overline{Y}_{Coil1} - \overline{Y}_{Coil2})$$

$$A_2 = U_{PE} \cdot (3 \cdot \overline{U}_{01} \cdot \overline{Y}_{Coil2} \cdot \overline{Z}_{0Tr} + 9 \cdot \overline{U}_{01} + \overline{U}_{01} \cdot \overline{Y}_{Coil1} \cdot \overline{Y}_{Coil2} \cdot \overline{Z}_{0Tr}^{2})$$

$$A_3 = 3 \cdot U_{PE} \cdot \overline{U}_{01} \cdot \overline{Y}_{Coil1} \cdot \overline{Z}_{0Tr}$$

$$A_4 = U_{PE} \cdot (-3 \cdot \overline{U}_{02} \cdot \overline{Y}_{Coil1} \cdot \overline{Z}_{0Tr} - 9 \cdot \overline{U}_{02} - \overline{U}_{02} \cdot \overline{Y}_{Coil1} \cdot \overline{Y}_{Coil2} \cdot \overline{Z}_{0Tr}^{2})$$

$$A_5 = -3 \cdot U_{PE} \cdot \overline{U}_{02} \cdot \overline{Y}_{Coil2} \cdot \overline{Z}_{0Tr}$$

$$\overline{Y}_{symm} = \frac{B_1 + B_2 + B_3 + B_4 + B_5}{B_6 \cdot B_7} \,,$$

where

$$B_1 = -3 \cdot U_{PE} \cdot \overline{U}_{01} \cdot \overline{Y}_{Coil1} \cdot \overline{Y}_{Coil2} \cdot \overline{Z}_{0Tr}$$

$$B_2 = 3 \cdot U_{PE} \cdot \overline{U}_{02} \cdot \overline{Y}_{Coil1} \cdot \overline{Y}_{Coil2} \cdot \overline{Z}_{0Tr}$$

$$B_3 = -3 \cdot (3 \cdot \overline{U}_{01} \cdot \overline{U}_{02} \cdot \overline{Y}_{Coil1} + 3 \cdot U_{PE} \cdot \overline{U}_{01} \cdot \overline{Y}_{Coil1})$$

$$B_4 = 9 \cdot \overline{U}_{01} \cdot \overline{U}_{02} \cdot \overline{Y}_{Coil2}$$

$$B_5 = 9 \cdot U_{PE} \cdot \overline{U}_{02} \cdot \overline{Y}_{Coil2}$$

$$B_6 = U_{PE} \cdot (\overline{Y}_{Coil1} \cdot \overline{Z}_{0Tr} + 3)$$

$$B_7 = \overline{U}_{01} \cdot \overline{Y}_{Coil2} \cdot \overline{Z}_{0Tr} - \overline{U}_{02} \cdot \overline{Y}_{Coil2} \cdot \overline{Z}_{0Tr} + 3 \cdot \overline{U}_{01} - 3 \cdot \overline{U}_{02},$$

where

$\overline{U}_{01}$ is the first value of the zero-sequence voltage

$\overline{U}_{02}$ is the second value of the zero-sequence voltage

$\overline{Y}_{Coil1}$ is the first value of the admittance of the arc suppression device

$\overline{Y}_{Coil2}$ is the second value of the admittance of the arc suppression device

$\overline{Z}_{0Tr}$ is a zero-sequence impedance between the arc suppression device and the neutral point of the three phase electric network.

4. A method as claimed in claim 1 or 2, wherein the quantity indicative of the zero-sequence voltage is a voltage $\overline{U}_{0Coil}$ over the arc suppression device (10) and wherein step c) comprises determining the symmetrical network admittance $\overline{Y}_{symm}$ and the asymmetry admittance $\overline{Y}_{asymm}$ according to the following equations:

$$\overline{Y}_{asymm} = \frac{C_1}{C_2 + C_3} \,,$$

where

$$C_1 = 3 \cdot \overline{U}_{0Coil1} \cdot \overline{U}_{0Coil2} \cdot (\overline{Y}_{Coil1} - \overline{Y}_{Coil2})$$

$$C_2 = U_{PE} \cdot (3 \cdot \overline{U}_{0Coil1} + \overline{U}_{0Coil1} \cdot \overline{Y}_{Coil1} \cdot \overline{Z}_{0Tr})$$

$$C_3 = U_{PE} \cdot (-3 \cdot \overline{U}_{0Coil2} - \overline{U}_{0Coil2} \cdot \overline{Y}_{Coil2} \cdot \overline{Z}_{0Tr})$$

$$\overline{Y}_{symm} = \frac{D_1 + D_2 + D_3}{D_4 + D_5},$$

where

$$D_1 = -3 \cdot (\overline{U}_{0Coil1} \cdot \overline{U}_{0Coil2} \cdot \overline{Y}_{Coil1} + U_{PE} \cdot \overline{U}_{0Coil1} \cdot \overline{Y}_{Coil1})$$

$$D_2 = 3 \cdot \overline{U}_{0Coil1} \cdot \overline{U}_{0Coil2} \cdot \overline{Y}_{Coil2}$$

$$D_3 = 3 \cdot U_{PE} \cdot \overline{U}_{0Coil2} \cdot \overline{Y}_{Coil2}$$

$$D_4 = U_{PE} \cdot (3 \cdot \overline{U}_{0Coil1} + \overline{U}_{0Coil1} \cdot \overline{Y}_{Coil1} \cdot \overline{Z}_{0Tr})$$

$$D_5 = U_{PE} \cdot (-3 \cdot \overline{U}_{0Coil2} - \overline{U}_{0Coil2} \cdot \overline{Y}_{Coil2} \cdot \overline{Z}_{0Tr})$$

where

$\overline{U}_{0Coil1}$ is the first value of the voltage over the arc suppression device
$\overline{U}_{0Coil2}$ is the second value of the voltage over the arc suppression device
$\overline{Y}_{Coil1}$ is the first value of the admittance of the arc suppression device
$\overline{Y}_{Coil2}$ is the second value of the admittance of the arc suppression device
$\overline{Z}_{0Tr}$ is a zero-sequence impedance between the arc suppression device and the neutral point of the three phase electric network.

5. A method as claimed in any one of claims 1 to 4, wherein step d) comprises adjusting the admittance of the arc suppression device (10) to a value that provides a predetermined degree of compensation.

6. A method as claimed in claim 5, wherein step d) comprises adjusting the admittance of the arc suppression device (10) to the value that provides the predetermined degree of compensation according to the following equation:

$$B_{coil\_res} = -\cfrac{1}{\cfrac{1}{B_{symm} + B_{asymm}} - \cfrac{X_{oTr}}{3}},$$

where
$B_{coil\_res}$ is an imaginary part of the admittance of the arc suppression device at a resonance point of the three phase electric network
$B_{symm}$ is an imaginary part of the determined symmetrical network admittance $\overline{Y}_{symm}$
$B_{asymm}$ is an imaginary part of the determined asymmetry admittance $\overline{Y}_{asymm}$
$X_{oTr}$ is a zero-sequence reactance between the arc suppression device and the neutral point of the three phase electric network.

7. A method as claimed in claim 5 or 6, wherein step d) comprises, when a phase-to-earth fault is present in the three phase electric network (20), adjusting the admittance of the arc suppression device (10) to the value that provides the predetermined degree of compensation according to the following equations depending on the faulted phase:

Phase A-to-earth fault:

$$B_{coil\_resA} = -\cfrac{1}{\cfrac{1}{B_{symm}} - \cfrac{X_{oTr}}{3}}$$

Phase B-to-earth fault:

$$B_{coil\_resB} = -\cfrac{1}{\cfrac{1}{B_{symm} + 1.5 \cdot B_{asymm} - \cfrac{\sqrt{3}}{2} \cdot G_{asymm}} - \cfrac{X_{oTr}}{3}}$$

Phase C-to-earth fault:

$$B_{coil\_resC} = -\cfrac{1}{\cfrac{1}{B_{symm} + 1.5 \cdot B_{asymm} + \cfrac{\sqrt{3}}{2} \cdot G_{asymm}} - \cfrac{X_{oTr}}{3}},$$

where

$B_{coil\_resA}$ is an imaginary part of the admittance of the arc suppression device at a resonance point of the three phase electric network during a phase A-to-earth fault

$B_{coil\_resB}$ is an imaginary part of the admittance of the arc suppression device at a resonance point of the three phase electric network during a phase B-to-earth fault

$B_{coil\_resC}$ is an imaginary part of the admittance of the arc suppression device at a resonance point of the three phase electric network during a phase C-to-earth fault

$B_{symm}$ is an imaginary part of the determined symmetrical network admittance $\overline{Y}_{symm}$

$B_{asymm}$ is an imaginary part of the determined asymmetry admittance $\overline{Y}_{asymm}$

$G_{asymm}$ is a real part of the determined asymmetry admittance $\overline{Y}_{asymm}$ $X_{oTr}$ is a zero-sequence reactance between the arc suppression device and the neutral point of the three phase electric network.

8. A computer program product comprising computer program code, wherein execution of the program code in a computer causes the computer to carry out the steps of the method according to any one of claims 1 to 7.

9. An apparatus for controlling an arc suppression device of a three phase electric network, which arc suppression device (10) has an adjustable admittance and is connected between a neutral point (21) of the three phase electric network (20) and earth; the apparatus comprising:

means configured to determine a first value of a zero-sequence voltage of the three phase electric network (20), or of a quantity indicative of the zero-sequence voltage, when an admittance of the arc suppression device (10) has a first value;
means configured to determine a second value of the zero-sequence voltage of the three phase electric network (20), or of the quantity indicative of the zero-sequence voltage, when the admittance of the arc suppression device (10) has a second value;
means configured to determine a symmetrical network admittance, which represents a sum of symmetrical phase-to-earth admittances of the three phase electric network (20), and an asymmetry admittance, which represents an asymmetry of phase-to-earth admittances of the three phase electric network (20) concentrated into one phase, on the basis of the determined first and second values of the zero-sequence voltage of the three phase electric network (20), or of the quantity indicative of the zero-sequence voltage, and the first and second values of the admittance of the arc suppression device (10); and
means configured to adjust the admittance of the arc suppression device (10) on the basis of the determined symmetrical network admittance and the determined asymmetry admittance.

**10.** An apparatus as claimed in claim 9, comprising means configured to change the admittance of the arc suppression device (10) from the first value to the second value the by changing an inductance and/or resistance of the arc suppression device (10).

**11.** An apparatus as claimed in claim 9 or 10, wherein the means configured to determine the symmetrical network admittance $\overline{Y}_{symm}$ and the asymmetry admittance $\overline{Y}_{asymm}$ are configured to perform the determining according to the following equations:

$$\overline{Y}_{asymm} = \frac{A_1}{A_2 + A_3 + A_4 + A_5} \ ,$$

where

$$A_1 = 9 \cdot \overline{U}_{01} \cdot \overline{U}_{02} \cdot (\overline{Y}_{Coil1} - \overline{Y}_{Coil2})$$

$$A_2 = U_{PE} \cdot (3 \cdot \overline{U}_{01} \cdot \overline{Y}_{Coil2} \cdot \overline{Z}_{0Tr} + 9 \cdot \overline{U}_{01} + \overline{U}_{01} \cdot \overline{Y}_{Coil1} \cdot \overline{Y}_{Coil2} \cdot \overline{Z}_{0Tr}^{\ 2})$$

$$A_3 = 3 \cdot U_{PE} \cdot \overline{U}_{01} \cdot \overline{Y}_{Coil1} \cdot \overline{Z}_{0Tr}$$

$$A_4 = U_{PE} \cdot (-3 \cdot \overline{U}_{02} \cdot \overline{Y}_{Coil1} \cdot \overline{Z}_{0Tr} - 9 \cdot \overline{U}_{02} - \overline{U}_{02} \cdot \overline{Y}_{Coil1} \cdot \overline{Y}_{Coil2} \cdot \overline{Z}_{0Tr}^{\ 2})$$

$$A_5 = -3 \cdot U_{PE} \cdot \overline{U}_{02} \cdot \overline{Y}_{Coil2} \cdot \overline{Z}_{0Tr}$$

$$\overline{Y}_{symm} = \frac{B_1 + B_2 + B_3 + B_4 + B_5}{B_6 \cdot B_7} \ ,$$

where

$$B_1 = -3 \cdot U_{PE} \cdot \overline{U}_{01} \cdot \overline{Y}_{Coil1} \cdot \overline{Y}_{Coil2} \cdot \overline{Z}_{0Tr}$$

$$B_2 = 3 \cdot U_{PE} \cdot \overline{U}_{02} \cdot \overline{Y}_{Coil1} \cdot \overline{Y}_{Coil2} \cdot \overline{Z}_{0Tr}$$

$$B_3 = -3 \cdot (3 \cdot \overline{U}_{01} \cdot \overline{U}_{02} \cdot \overline{Y}_{Coil1} + 3 \cdot U_{PE} \cdot \overline{U}_{01} \cdot \overline{Y}_{Coil1})$$

$$B_4 = 9 \cdot \overline{U}_{01} \cdot \overline{U}_{02} \cdot \overline{Y}_{Coil2}$$

$$B_5 = 9 \cdot U_{PE} \cdot \overline{U}_{02} \cdot \overline{Y}_{Coil2}$$

$$B_6 = U_{PE} \cdot (\overline{Y}_{Coil1} \cdot \overline{Z}_{0Tr} + 3)$$

$$B_7 = \overline{U}_{01} \cdot \overline{Y}_{Coil2} \cdot \overline{Z}_{0Tr} - \overline{U}_{02} \cdot \overline{Y}_{Coil2} \cdot \overline{Z}_{0Tr} + 3 \cdot \overline{U}_{01} - 3 \cdot \overline{U}_{02},$$

where

$\overline{U}_{01}$ is the first value of the zero-sequence voltage

$\overline{U}_{02}$ is the second value of the zero-sequence voltage

$\overline{Y}_{Coil1}$ is the first value of the admittance of the arc suppression device

$\overline{Y}_{Coil2}$ is the second value of the admittance of the arc suppression device

$\overline{Z}_{0Tr}$ is a zero-sequence impedance between the arc suppression device and the neutral point of the three phase electric network.

12. An apparatus as claimed in claim 9 or 10, wherein the quantity indicative of the zero-sequence voltage is a voltage $\overline{U}_{0Coil}$ over the arc suppression device (10) and wherein the means configured to determine the symmetrical network admittance $\overline{Y}_{symm}$ and the asymmetry admittance $\overline{Y}_{asymm}$ are configured to perform the determining according to the following equations:

$$\overline{Y}_{asymm} = \frac{C_1}{C_2 + C_3} \,,$$

where

$$C_1 = 3 \cdot \overline{U}_{0Coil1} \cdot \overline{U}_{0Coil2} \cdot (\overline{Y}_{Coil1} - \overline{Y}_{Coil2})$$

$$C_2 = U_{PE} \cdot (3 \cdot \overline{U}_{0Coil1} + \overline{U}_{0Coil1} \cdot \overline{Y}_{Coil1} \cdot \overline{Z}_{0Tr})$$

$$C_3 = U_{PE} \cdot (-3 \cdot \overline{U}_{0Coil2} - \overline{U}_{0Coil2} \cdot \overline{Y}_{Coil2} \cdot \overline{Z}_{0Tr})$$

$$\overline{Y}_{symm} = \frac{D_1 + D_2 + D_3}{D_4 + D_5} \,,$$

where

$$D_1 = -3 \cdot (\overline{U}_{0Coil1} \cdot \overline{U}_{0Coil2} \cdot \overline{Y}_{Coil1} + U_{PE} \cdot \overline{U}_{0Coil1} \cdot \overline{Y}_{Coil1})$$

$$D_2 = 3 \cdot \overline{U}_{0Coil1} \cdot \overline{U}_{0Coil2} \cdot \overline{Y}_{Coil2}$$

$$D_3 = 3 \cdot U_{PE} \cdot \overline{U}_{0Coil2} \cdot \overline{Y}_{Coil2}$$

$$D_4 = U_{PE} \cdot (3 \cdot \overline{U}_{0Coil1} + \overline{U}_{0Coil1} \cdot \overline{Y}_{Coil1} \cdot \overline{Z}_{0Tr})$$

$$D_5 = U_{PE} \cdot (-3 \cdot \overline{U}_{0Coil2} - \overline{U}_{0Coil2} \cdot \overline{Y}_{Coil2} \cdot \overline{Z}_{0Tr})$$

where

$\overline{U}_{0Coil1}$ is the first value of the voltage over the arc suppression device

$\overline{U}_{0Coil2}$ is the second value of the voltage over the arc suppression device

$\overline{Y}_{Coil1}$ is the first value of the admittance of the arc suppression device

$\overline{Y}_{Coil2}$ is the second value of the admittance of the arc suppression device

$\overline{Z}_{0Tr}$ is a zero-sequence impedance between the arc suppression device and the neutral point of the three phase electric network.

13. An apparatus as claimed in any one of claims 9 to 12, wherein the means configured to adjust the admittance of the arc suppression device (10) are configured to adjust the admittance of the arc suppression device (10) to a value that provides a predetermined degree of compensation.

14. An apparatus as claimed in claim 13, wherein the means configured to adjust the admittance of the arc suppression device (10) are configured to adjust the admittance of the arc suppression device (10) to the value that provides the predetermined degree of compensation according to the following equation:

$$B_{coil\_res} = -\cfrac{1}{\cfrac{1}{B_{symm} + B_{asymm}} - \cfrac{X_{oTr}}{3}},$$

where
$B_{coil\_res}$ is an imaginary part of the admittance of the arc suppression device at a resonance point of the three phase electric network
$B_{symm}$ is an imaginary part of the determined symmetrical network admittance $\overline{Y}_{symm}$
$B_{asymm}$ is an imaginary part of the determined asymmetry admittance $\overline{Y}_{asymm}$
$X_{oTr}$ is a zero-sequence reactance between the arc suppression device and the neutral point of the three phase electric network.

15. An apparatus as claimed in claim 13 or 14, wherein the means configured to adjust the admittance of the arc suppression device (10) are configured to, when a phase-to-earth fault is present in the three phase electric network (20), adjust the admittance of the arc suppression device (10) to the value that provides the predetermined degree of compensation according to the following equations depending on the faulted phase:

Phase A-to-earth fault:

$$B_{coil\_resA} = -\cfrac{1}{\cfrac{1}{B_{symm}} - \cfrac{X_{oTr}}{3}}$$

Phase B-to-earth fault:

$$B_{coil\_resB} = -\cfrac{1}{\cfrac{1}{B_{symm} + 1.5 \cdot B_{asymm} - \cfrac{\sqrt{3}}{2} \cdot G_{asymm}} - \cfrac{X_{oTr}}{3}}$$

Phase C-to-earth fault:

$$B_{coil\_resC} = -\cfrac{1}{\cfrac{1}{B_{symm} + 1.5 \cdot B_{asymm} + \cfrac{\sqrt{3}}{2} \cdot G_{asymm}} - \cfrac{X_{oTr}}{3}},$$

where

$B_{coil\_resA}$ is an imaginary part of the admittance of the arc suppression device at a resonance point of the three phase electric network during a phase A-to-earth fault

$B_{coil\_resB}$ is an imaginary part of the admittance of the arc suppression device at a resonance point of the three phase electric network during a phase B-to-earth fault

$B_{coil\_resC}$ is an imaginary part of the admittance of the arc suppression device at a resonance point of the three phase electric network during a phase C-to-earth fault

$B_{symm}$ is an imaginary part of the determined symmetrical network admittance $\overline{Y}_{symm}$

$B_{asymm}$ is an imaginary part of the determined asymmetry admittance $\overline{Y}_{asymm}$

$G_{asymm}$ is a real part of the determined asymmetry admittance $\overline{Y}_{asymm}$ $X_{oTr}$ is a zero-sequence reactance between the arc suppression device and the neutral point of the three phase electric network.

16. An arc suppression device for a three phase electric network, the arc suppression device (10) having an adjustable admittance and being configured to be connected between a neutral point (21) of the three phase electric network (20) and earth, and comprising an apparatus as claimed in any one of claims 9 to 15.

**Patentansprüche**

1. Verfahren zum Steuern einer Lichtbogenunterdrückungsvorrichtung eines dreiphasigen elektrischen Netzwerks, wobei die Lichtbogenunterdrückungsvorrichtung (10) eine einstellbare Admittanz aufweist und zwischen einen Neutralpunkt (21) des dreiphasigen elektrischen Netzwerks (20) und Erde geschaltet ist; wobei das Verfahren Folgendes umfasst:

   a) Bestimmen (110) eines ersten Werts einer Nullsystemspannung des dreiphasigen elektrischen Netzwerks (20) oder einer Größe, die die Nullsystemspannung angibt, wenn eine Admittanz der Lichtbogenunterdrückungsvorrichtung (10) einen ersten Wert hat;
   b) Bestimmen (120) eines zweiten Werts der Nullsystemspannung des dreiphasigen elektrischen Netzwerks (20) oder der Größe, die die Nullsystemspannung angibt, wenn die Admittanz der Lichtbogenunterdrückungsvorrichtung (10) einen zweiten Wert hat;
   c) Bestimmen (130) einer symmetrischen Netzwerkadmittanz, die eine Summe symmetrischer Phase-zu-Erde-Admittanzen des dreiphasigen elektrischen Netzwerks (20) darstellt, und einer Asymmetrieadmittanz, die eine Asymmetrie von Phase-zu-Erde-Admittanzen des dreiphasigen elektrischen Netzwerks (20), in eine Phase konzentriert, darstellt, auf der Grundlage des bestimmten ersten und zweiten Werts der Nullsystemspannung des dreiphasigen elektrischen Netzwerks (20) oder der Größe, die die Nullsystemspannung angibt, und des ersten und zweiten Werts der Admittanz der Lichtbogenunterdrückungsvorrichtung (10); und
   d) Einstellen (140) der Admittanz der Lichtbogenunterdrückungsvorrichtung (10) auf der Grundlage der bestimmten symmetrischen Netzwerkadmittanz und der bestimmten Asymmetrieadmittanz.

2. Verfahren nach Anspruch 1, umfassend Ändern, zwischen den Schritten a) und b), der Admittanz der Lichtbogenunterdrückungsvorrichtung (10) von dem ersten Wert auf den zweiten Wert durch Ändern einer Induktanz und/oder eines Widerstands der Lichtbogenunterdrückungsvorrichtung (10).

3. Verfahren nach Anspruch 1 oder 2, wobei Schritt c) Bestimmen der symmetrischen Netzwerkadmittanz $\overline{Y}_{symm}$ und der Asymmetrieadmittanz $\overline{Y}_{asymm}$ gemäß den folgenden Gleichungen umfasst:

$$\overline{Y}_{asymm} = \frac{A_1}{A_2 + A_3 + A_4 + A_5},$$

wobei

$$A_1 = 9 \cdot \overline{U}_{01} \cdot \overline{U}_{02} \cdot \left( \overline{Y}_{Spule1} - \overline{Y}_{Spule2} \right)$$

$$A_2 = U_{PE} \cdot \left( 3 \cdot \overline{U}_{01} \cdot \overline{Y}_{Spule2} \cdot \overline{Z}_{OTr} + 9 \cdot \overline{U}_{01} + \overline{U}_{01} \cdot \overline{Y}_{Spule1} \cdot \overline{Y}_{Spule2} \cdot \overline{Z}_{OTr}^{\,2} \right)$$

$$A_3 = 3 \cdot U_{PE} \cdot \overline{U}_{01} \cdot \overline{Y}_{Spule1} \cdot \overline{Z}_{OTr}$$

$$A_4 = U_{PE} \cdot \left( -3 \cdot \overline{U}_{02} \cdot \overline{Y}_{Spule1} \cdot \overline{Z}_{OTr} - 9 \cdot \overline{U}_{02} - \overline{U}_{02} \cdot \overline{Y}_{Spule1} \cdot \overline{Y}_{Spule2} \cdot \overline{Z}_{OTr}^{\,2} \right)$$

$$A_5 = -3 \cdot U_{PE} \cdot \overline{U}_{02} \cdot \overline{Y}_{Spule2} \cdot \overline{Z}_{OTr}$$

$$\overline{Y}_{symm} = \frac{B_1 + B_2 + B_3 + B_4 + B_5}{B_6 \cdot B_7},$$

wobei

$$B_1 = -3 \cdot U_{PE} \cdot \overline{U}_{01} \cdot \overline{Y}_{Spule1} \cdot \overline{Y}_{Spule2} \cdot \overline{Z}_{OTr}$$

$$B_2 = 3 \cdot U_{PE} \cdot \overline{U}_{02} \cdot \overline{Y}_{Spule1} \cdot \overline{Y}_{Spule2} \cdot \overline{Z}_{OTr}$$

$$B_3 = -3 \cdot (3 \cdot \overline{U}_{01} \cdot \overline{U}_{02} \cdot \overline{Y}_{Spule1} + 3 \cdot U_{PE} \cdot \overline{U}_{01} \cdot \overline{Y}_{Spule1})$$

$$B_4 = 9 \cdot \overline{U}_{01} \cdot \overline{U}_{02} \cdot \overline{Y}_{Spule2}$$

$$B_5 = 9 \cdot U_{PE} \cdot \overline{U}_{02} \cdot \overline{Y}_{Spule2}$$

$$B_6 = U_{PE} \cdot \left( \overline{Y}_{Spule1} \cdot \overline{Z}_{OTr} + 3 \right)$$

$$B_7 = \overline{U}_{01} \cdot \overline{Y}_{Spule2} \cdot \overline{Z}_{OTr} - \overline{U}_{02} \cdot \overline{Y}_{Spule2} \cdot \overline{Z}_{OTr} + 3 \cdot \overline{U}_{01} - 3 \cdot \overline{U}_{02},$$

wobei
$\overline{U}_{01}$ der erste Wert der Nullsystemspannung ist $\overline{U}_{02}$ der zweite Wert der Nullsystemspannung ist $\overline{Y}_{Spule1}$ der erste Wert der Admittanz der Lichtbogenunterdrückungsvorrichtung ist
$\overline{Y}_{Spule2}$ der zweite Wert der Admittanz der Lichtbogenunterdrückungsvorrichtung ist
$\overline{Z}_{OTr}$ eine Nullsystemimpedanz zwischen der Lichtbogenunterdrückungsvorrichtung und dem Neutralpunkt des dreiphasigen elektrischen Netzwerks ist.

4. Verfahren nach Anspruch 1 oder 2, wobei die Größe, die die Nullsystemspannung angibt, eine Spannung $\overline{U}_{0\,Spule}$ über der Lichtbogenunterdrückungsvorrichtung (10) ist und wobei Schritt c) Bestimmen der symmetrischen Netzwerkadmittanz $\overline{Y}_{symm}$ und der Asymmetrieadmittanz $\overline{Y}_{asymm}$ gemäß den folgenden Gleichungen umfasst:

$$\overline{Y}_{asymm} = \frac{C_1}{C_2 + C_3},$$

wobei

$$C_1 = 3 \cdot \overline{U}_{0Spule1} \cdot \overline{U}_{0Spule2} \cdot \left(\overline{Y}_{Spule1} - \overline{Y}_{Spule2}\right)$$

$$C_2 = U_{PE} \cdot \left(3 \cdot \overline{U}_{0Spule1} + \overline{U}_{0Spule1} \cdot \overline{Y}_{Spule1} \cdot \overline{Z}_{OTr}\right)$$

$$C_3 = U_{PE} \cdot \left(-3 \cdot \overline{U}_{0Spule2} - \overline{U}_{0Spule2} \cdot \overline{Y}_{Spule2} \cdot \overline{Z}_{OTr}\right)$$

$$\overline{Y}_{symm} = \frac{D_1 + D_2 + D_3}{D_4 + D_5},$$

wobei

$$D_1 = -3 \cdot \left(\overline{U}_{0Spule1} \cdot \overline{U}_{0Spule2} \cdot \overline{Y}_{Spule1} + U_{PE} \cdot \overline{U}_{0Spule1} \cdot \overline{Y}_{Spule1}\right)$$

$$D_2 = 3 \cdot \overline{U}_{0Spule1} \cdot \overline{U}_{0Spule2} \cdot \overline{Y}_{Spule2}$$

$$D_3 = 3 \cdot U_{PE} \cdot \overline{U}_{0Spule2} \cdot \overline{Y}_{Spule2}$$

$$D_4 = U_{PE} \cdot \left(3 \cdot \overline{U}_{0Spule1} + \overline{U}_{0Spule1} \cdot \overline{Y}_{Spule1} \cdot \overline{Z}_{OTr}\right)$$

$$D_5 = U_{PE} \cdot \left(-3 \cdot \overline{U}_{0Spule2} - \overline{U}_{0Spule2} \cdot \overline{Y}_{Spule2} \cdot \overline{Z}_{OTr}\right)$$

wobei
$\overline{U}_{0Spule1}$ der erste Wert der Spannung über der Lichtbogenunterdrückungsvorrichtung ist
$\overline{U}_{0Spule2}$ der zweite Wert der Spannung über der Lichtbogenunterdrückungsvorrichtung ist
$\overline{Y}_{Spule1}$ der erste Wert der Admittanz der Lichtbogenunterdrückungsvorrichtung ist
$\overline{Y}_{Spule2}$ der zweite Wert der Admittanz der Lichtbogenunterdrückungsvorrichtung ist
$\overline{Z}_{OTr}$ eine Nullsystemimpedanz zwischen der Lichtbogenunterdrückungsvorrichtung und dem Neutralpunkt des dreiphasigen elektrischen Netzwerks ist.

5. Verfahren nach einem der Ansprüche 1 bis 4, wobei Schritt d) Einstellen der Admittanz der Lichtbogenunterdrückungsvorrichtung (10) auf einen Wert, der einen vorbestimmten Grad an Kompensation liefert, umfasst.

6. Verfahren nach Anspruch 5, wobei Schritt d) Einstellen der Admittanz der Lichtbogenunterdrückungsvorrichtung (10) auf den Wert, der den vorbestimmten Grad an Kompensation liefert, gemäß der folgenden Gleichung umfasst:

$$B_{Spule\_res} = -\frac{1}{\frac{1}{B_{symm} + B_{asymm}} - \frac{X_{0Tr}}{3}},$$

wobei
$B_{Spule\_res}$ ein Imaginärteil der Admittanz der Lichtbogenunterdrückungsvorrichtung an einem Resonanzpunkt des dreiphasigen elektrischen Netzwerks ist
$B_{symm}$ ein Imaginärteil der bestimmten symmetrischen Netzwerkadmittanz $\overline{Y}_{symm}$ ist
$B_{asymm}$ ein Imaginärteil der bestimmten Asymmetrieadmittanz $\overline{Y}_{asymm}$ ist
$X_{0TR}$ eine Nullsystemreaktanz zwischen der Lichtbogenunterdrückungsvorrichtung und dem Neutralpunkt des dreiphasigen elektrischen Netzwerks ist.

**7.** Verfahren nach Anspruch 5 oder 6, wobei Schritt d) bei Vorliegen eines Phase-zu-Erde-Fehlers in dem dreiphasigen elektrischen Netzwerk (20) Einstellen der Admittanz der Lichtbogenunterdrückungsvorrichtung (10) auf den Wert, der den vorbestimmten Grad an Kompensation liefert, gemäß den folgenden Gleichungen, abhängig von der fehlerhaften Phase, umfasst:

Phase-A-zu-Erde-Fehler:

$$B_{Spule\_resA} = -\cfrac{1}{\cfrac{1}{B_{symm}} - \cfrac{X_{0Tr}}{3}}$$

Phase-B-zu-Erde-Fehler:

$$B_{Spule\_resB} = -\cfrac{1}{\cfrac{1}{B_{symm} + 1.5 \cdot B_{asymm} - \cfrac{\sqrt{3}}{2} \cdot G_{asymm}} - \cfrac{X_{0Tr}}{3}}$$

Phase-C-zu-Erde-Fehler:

$$B_{Spule\_resC} = -\cfrac{1}{\cfrac{1}{B_{symm} + 1.5 \cdot B_{asymm} + \frac{\sqrt{3}}{2} \cdot G_{asymm}} - \frac{X_{0Tr}}{3}},$$

wobei

$B_{Spule\_resA}$ ein Imaginärteil der Admittanz der Lichtbogenunterdrückungsvorrichtung an einem Resonanzpunkt des dreiphasigen elektrischen Netzwerks während eines Phase-A-zu-Erde-Fehlers ist $B_{Spule\_resB}$ ein Imaginärteil der Admittanz der Lichtbogenunterdrückungsvorrichtung an einem Resonanzpunkt des dreiphasigen elektrischen Netzwerks während eines Phase-B-zu-Erde-Fehlers ist $B_{Spule\_resC}$ ein Imaginärteil der Admittanz der Lichtbogenunterdrückungsvorrichtung an einem Resonanzpunkt des dreiphasigen elektrischen Netzwerks während eines Phase-C-zu-Erde-Fehlers ist $B_{symm}$ ein Imaginärteil der bestimmten symmetrischen Netzwerkadmittanz $\overline{Y}_{symm}$ ist

$B_{asymm}$ ein Imaginärteil der bestimmten Asymmetrieadmittanz $\overline{Y}_{asymm}$ ist

$G_{asymm}$ ein Realteil der bestimmten Asymmetrieadmittanz $\overline{Y}_{asymm}$ ist

$X_{0Tr}$ eine Nullsystemreaktanz zwischen der Lichtbogenunterdrückungsvorrichtung und dem Neutralpunkt des dreiphasigen elektrischen Netzwerks ist.

**8.** Computerprogrammprodukt, umfassend Computerprogrammcode, wobei eine Ausführung des Programmcodes in einem Computer bewirkt, dass der Computer die Schritte des Verfahrens nach einem der Ansprüche 1 bis 7 ausführt.

**9.** Einrichtung zum Steuern einer Lichtbogenunterdrückungsvorrichtung eines dreiphasigen elektrischen Netzwerks, wobei die Lichtbogenunterdrückungsvorrichtung (10) eine einstellbare Admittanz aufweist und zwischen einen Neutralpunkt (21) des dreiphasigen elektrischen Netzwerks (20) und Erde geschaltet ist; wobei die Einrichtung Folgendes umfasst:

Mittel, ausgelegt zum Bestimmen eines ersten Werts einer Nullsystemspannung des dreiphasigen elektrischen Netzwerks (20) oder einer Größe, die die Nullsystemspannung angibt, wenn eine Admittanz der Lichtbogenunterdrückungsvorrichtung (10) einen ersten Wert hat;
Mittel, ausgelegt zum Bestimmen eines zweiten Werts der Nullsystemspannung des dreiphasigen elektrischen Netzwerks (20) oder der Größe, die die Nullsystemspannung angibt, wenn die Admittanz der Lichtbogenunterdrückungsvorrichtung (10) einen zweiten Wert hat;
Mittel, ausgelegt zum Bestimmen einer symmetrischen Netzwerkadmittanz, die eine Summe symmetrischer Phase-zu-Erde-Admittanzen des dreiphasigen elektrischen Netzwerks (20) darstellt, und einer Asymmetrieadmittanz, die eine Asymmetrie von Phase-zu-Erde-Admittanzen des dreiphasigen elektrischen Netzwerks (20), in eine Phase konzentriert, darstellt, auf der Grundlage des bestimmten ersten und zweiten Werts der Nullsystemspannung des dreiphasigen elektrischen Netzwerks (20) oder der Größe, die die Nullsystemspannung angibt, und des ersten und zweiten Werts der Admittanz der Lichtbogenunterdrückungsvorrichtung (10); und Mittel, ausgelegt zum Einstellen der Admittanz der Lichtbogenunterdrückungsvorrichtung (10) auf der Grundlage der bestimmten symmetrischen Netzwerkadmittanz und der bestimmten Asymmetrieadmittanz.

10. Einrichtung nach Anspruch 9, umfassend Mittel, ausgelegt zum Ändern der Admittanz der Lichtbogenunterdrückungsvorrichtung (10) von dem ersten Wert auf den zweiten Wert durch Ändern einer Induktanz und/oder eines Widerstands der Lichtbogenunterdrückungsvorrichtung (10).

11. Einrichtung nach Anspruch 9 oder 10, wobei die Mittel, die ausgelegt sind zum Bestimmen der symmetrischen Netzwerkadmittanz $\overline{Y}_{symm}$ und der Asymmetrieadmittanz $\overline{Y}_{asymm}$ ausgelegt sind zum Durchführen des Bestimmens gemäß den folgenden Gleichungen:

$$\overline{Y}_{asymm} = \frac{A_1}{A_2 + A_3 + A_4 + A_5},$$

wobei

$$A_1 = 9 \cdot \overline{U}_{01} \cdot \overline{U}_{02} \cdot \left(\overline{Y}_{Spule1} - \overline{Y}_{Spule2}\right)$$

$$A_2 = U_{PE} \cdot \left(3 \cdot \overline{U}_{01} \cdot \overline{Y}_{Spule2} \cdot \overline{Z}_{OTr} + 9 \cdot \overline{U}_{01} + \overline{U}_{01} \cdot \overline{Y}_{Spule1} \cdot \overline{Y}_{Spule2} \cdot \overline{Z}_{OTr}^2\right)$$

$$A_3 = 3 \cdot U_{PE} \cdot \overline{U}_{01} \cdot \overline{Y}_{Spule1} \cdot \overline{Z}_{OTr}$$

$$A_4 = U_{PE} \cdot \left(-3 \cdot \overline{U}_{02} \cdot \overline{Y}_{Spule1} \cdot \overline{Z}_{OTr} - 9 \cdot \overline{U}_{02} - \overline{U}_{02} \cdot \overline{Y}_{Spule1} \cdot \overline{Y}_{Spule2} \cdot \overline{Z}_{OTr}^2\right)$$

$$A_5 = -3 \cdot U_{PE} \cdot \overline{U}_{02} \cdot \overline{Y}_{Spule2} \cdot \overline{Z}_{OTr}$$

$$\overline{Y}_{symm} = \frac{B_1 + B_2 + B_3 + B_4 + B_5}{B_6 \cdot B_7},$$

wobei

$$B_1 = -3 \cdot U_{PE} \cdot \overline{U}_{01} \cdot \overline{Y}_{Spule1} \cdot \overline{Y}_{Spule2} \cdot \overline{Z}_{OTr}$$

$$B_2 = 3 \cdot U_{PE} \cdot \overline{U}_{02} \cdot \overline{Y}_{Spule1} \cdot \overline{Y}_{Spule2} \cdot \overline{Z}_{OTr}$$

$$B_3 = -3 \cdot (3 \cdot \overline{U}_{01} \cdot \overline{U}_{02} \cdot \overline{Y}_{Spule1} + 3 \cdot U_{PE} \cdot \overline{U}_{01} \cdot \overline{Y}_{Spule1})$$

$$B_4 = 9 \cdot \overline{U}_{01} \cdot \overline{U}_{02} \cdot \overline{Y}_{Spule2}$$

$$B_5 = 9 \cdot U_{PE} \cdot \overline{U}_{02} \cdot \overline{Y}_{Spule2}$$

$$B_6 = U_{PE} \cdot \left( \overline{Y}_{Spule1} \cdot \overline{Z}_{OTr} + 3 \right)$$

$$B_7 = \overline{U}_{01} \cdot \overline{Y}_{Spule2} \cdot \overline{Z}_{OTr} - \overline{U}_{02} \cdot \overline{Y}_{Spule2} \cdot \overline{Z}_{OTr} + 3 \cdot \overline{U}_{01} - 3 \cdot \overline{U}_{02},$$

wobei
$\overline{U}_{01}$ der erste Wert der Nullsystemspannung ist $\overline{U}_{02}$ der zweite Wert der Nullsystemspannung ist $\overline{Y}_{Spule1}$ der erste Wert der Admittanz der Lichtbogenunterdrückungsvorrichtung ist
$\overline{Y}_{Spule2}$ der zweite Wert der Admittanz der Lichtbogenunterdrückungsvorrichtung ist
$\overline{Z}_{OTr}$ eine Nullsystemimpedanz zwischen der Lichtbogenunterdrückungsvorrichtung und dem Neutralpunkt des dreiphasigen elektrischen Netzwerks ist.

12. Einrichtung nach Anspruch 9 oder 10, wobei die Größe, die die Nullsystemspannung angibt, eine Spannung $\overline{U}_{0Spule}$ über der Lichtbogenunterdrückungsvorrichtung (10) ist und die Mittel, die ausgelegt sind zum Bestimmen der symmetrischen Netzwerkadmittanz $\overline{Y}_{symm}$ und der Asymmetrieadmittanz $\overline{Y}_{asymm}$, ausgelegt sind zum Durchführen des Bestimmens gemäß den folgenden Gleichungen:

$$\overline{Y}_{asymm} = \frac{C_1}{C_2 + C_3},$$

wobei

$$C_1 = 3 \cdot \overline{U}_{0Spule1} \cdot \overline{U}_{0Spule2} \cdot \left( \overline{Y}_{Spule1} - \overline{Y}_{Spule2} \right)$$

$$C_2 = U_{PE} \cdot \left( 3 \cdot \overline{U}_{0Spule1} + \overline{U}_{0Spule1} \cdot \overline{Y}_{Spule1} \cdot \overline{Z}_{OTr} \right)$$

$$C_3 = U_{PE} \cdot \left( -3 \cdot \overline{U}_{0Spule2} - \overline{U}_{0Spule2} \cdot \overline{Y}_{Spule2} \cdot \overline{Z}_{OTr} \right)$$

$$\overline{Y}_{symm} = \frac{D_1 + D_2 + D_3}{D_4 + D_5},$$

wobei

$$D_1 = -3 \cdot \left( \overline{U}_{0Spule1} \cdot \overline{U}_{0Spule2} \cdot \overline{Y}_{Spule1} + U_{PE} \cdot \overline{U}_{0Spule1} \cdot \overline{Y}_{Spule1} \right)$$

$$D_2 = 3 \cdot \overline{U}_{0Spule1} \cdot \overline{U}_{0Spule2} \cdot \overline{Y}_{Spule2}$$

$$D_3 = 3 \cdot U_{PE} \cdot \overline{U}_{0Spule2} \cdot \overline{Y}_{Spule2}$$

$$D_4 = U_{PE} \cdot \left( 3 \cdot \overline{U}_{0Spule1} + \overline{U}_{0Spule1} \cdot \overline{Y}_{Spule1} \cdot \overline{Z}_{OTr} \right)$$

$$D_5 = U_{PE} \cdot \left( -3 \cdot \overline{U}_{0Spule2} - \overline{U}_{0Spule2} \cdot \overline{Y}_{Spule2} \cdot \overline{Z}_{OTr} \right)$$

wobei
$\overline{U}_{0Spule1}$ der erste Wert der Spannung über der Lichtbogenunterdrückungsvorrichtung ist
$\overline{U}_{0Spule2}$ der zweite Wert der Spannung über der Lichtbogenunterdrückungsvorrichtung ist

$\overline{Y}_{Spule1}$ der erste Wert der Admittanz der Lichtbogenunterdrückungsvorrichtung ist

$\overline{Y}_{Spule2}$ der zweite Wert der Admittanz der Lichtbogenunterdrückungsvorrichtung ist

$\overline{Z}_{0Tr}$ eine Nullsystemimpedanz zwischen der Lichtbogenunterdrückungsvorrichtung und dem Neutralpunkt des dreiphasigen elektrischen Netzwerks ist.

13. Einrichtung nach einem der Ansprüche 9 bis 12, wobei die Mittel, die ausgelegt sind zum Einstellen der Admittanz der Lichtbogenunterdrückungsvorrichtung (10), ausgelegt sind zum Einstellen der Admittanz der Lichtbogenunterdrückungsvorrichtung (10) auf einen Wert, der einen vorbestimmten Grad an Kompensation liefert.

14. Einrichtung nach Anspruch 13, wobei die Mittel, die ausgelegt sind zum Einstellen der Admittanz der Lichtbogenunterdrückungsvorrichtung (10), ausgelegt sind zum Einstellen der Admittanz der Lichtbogenunterdrückungsvorrichtung (10) auf den Wert, der den vorbestimmten Grad an Kompensation liefert, gemäß der folgenden Gleichung:

$$B_{Spule\_res} = -\frac{1}{\frac{1}{B_{symm}+B_{asymm}} - \frac{X_{0Tr}}{3}},$$

wobei

$B_{Spule\_res}$ ein Imaginärteil der Admittanz der Lichtbogenunterdrückungsvorrichtung an einem Resonanzpunkt des dreiphasigen elektrischen Netzwerks ist

$B_{symm}$ ein Imaginärteil der bestimmten symmetrischen Netzwerkadmittanz $\overline{Y}_{symm}$ ist

$B_{asymm}$ ein Imaginärteil der bestimmten Asymmetrieadmittanz $\overline{Y}_{asymm}$ ist

$X_{0Tr}$ eine Nullsystemreaktanz zwischen der Lichtbogenunterdrückungsvorrichtung und dem Neutralpunkt des dreiphasigen elektrischen Netzwerks ist.

15. Einrichtung nach Anspruch 13 oder 14, wobei die Mittel, die ausgelegt sind zum Einstellen der Admittanz der Lichtbogenunterdrückungsvorrichtung (10), ausgelegt sind, bei Vorliegen eines Phase-zu-Erde-Fehlers in dem dreiphasigen elektrischen Netzwerk (20), zum Einstellen der Admittanz der Lichtbogenunterdrückungsvorrichtung (10) auf den Wert, der den vorbestimmten Grad an Kompensation liefert, gemäß der folgenden Gleichung, abhängig von der fehlerhaften Phase:

Phase-A-zu-Erde-Fehler:

$$B_{Spule\_resA} = -\frac{1}{\frac{1}{B_{symm}} - \frac{X_{0Tr}}{3}}$$

Phase-B-zu-Erde-Fehler:

$$B_{Spule\_resB} = -\frac{1}{\frac{1}{B_{symm} + 1.5 \cdot B_{asymm} - \frac{\sqrt{3}}{2} \cdot G_{asymm}} - \frac{X_{0Tr}}{3}}$$

Phase-C-zu-Erde-Fehler:

$$B_{Spule\_resC} = -\frac{1}{\frac{1}{B_{symm} + 1.5 \cdot B_{asymm} + \frac{\sqrt{3}}{2} \cdot G_{asymm}} - \frac{X_{0Tr}}{3}},$$

wobei

$B_{Spule\_resA}$ ein Imaginärteil der Admittanz der Lichtbogenunterdrückungsvorrichtung an einem Resonanzpunkt des dreiphasigen elektrischen Netzwerks während eines Phase-A-zu-Erde-Fehlers ist $B_{Spule\_resB}$ ein Imaginärteil der Admittanz der Lichtbogenunterdrückungsvorrichtung an einem Resonanzpunkt des dreiphasigen elektrischen Netzwerks während eines Phase-B-zu-Erde-Fehlers ist $B_{Spule\_resC}$ ein Imaginärteil der Admittanz der Lichtbogenunterdrückungsvorrichtung an einem Resonanzpunkt des dreiphasigen elektrischen Netzwerks während eines Phase-C-zu-Erde-Fehlers ist $B_{symm}$ ein Imaginärteil der bestimmten symmetrischen Netzwerkadmittanz $\overline{Y}_{symm}$ ist

$B_{asymm}$ ein Imaginärteil der bestimmten Asymmetrieadmittanz $\overline{Y}_{asymm}$ ist

$G_{asymm}$ ein Realteil der bestimmten Asymmetrieadmittanz $\overline{Y}_{asymm}$ ist

$X_{0Tr}$ eine Nullsystemreaktanz zwischen der Lichtbogenunterdrückungsvorrichtung und dem Neutralpunkt des dreiphasigen elektrischen Netzwerks ist.

16. Lichtbogenunterdrückungsvorrichtung für ein dreiphasiges elektrisches Netzwerk, wobei die Lichtbogenunterdrückungsvorrichtung (10) eine einstellbare Admittanz aufweist und dazu ausgelegt ist, zwischen einen Neutralpunkt (21) des dreiphasigen elektrischen Netzwerks (20) und Erde geschaltet zu sein, und umfassend eine Einrichtung nach einem der Ansprüche 9 bis 15.

## Revendications

1. Procédé de commande d'un dispositif de suppression d'arc d'un réseau électrique triphasé, le dispositif de suppression d'arc (10) ayant une admittance ajustable et étant connecté entre un point neutre (21) du réseau électrique triphasé (20) et la terre ; le procédé comprenant les étapes suivantes :

   a) déterminer (110) une première valeur d'une tension homopolaire du réseau électrique triphasé (20), ou d'une quantité indicative de la tension homopolaire, lorsqu'une admittance du dispositif de suppression d'arc (10) a une première valeur ;
   b) déterminer (120) une seconde valeur de la tension homopolaire du réseau électrique triphasé (20), ou de la quantité indicative de la tension homopolaire, lorsque l'admittance du dispositif de suppression d'arc (10) a une seconde valeur ;
   c) déterminer (130) une admittance de réseau symétrique, qui représente une somme des admittances symétriques Phase vers terre du réseau électrique triphasé (20), et une admittance d'asymétrie, qui représente une asymétrie des admittances Phase vers terre du réseau électrique triphasé (20) concentrées dans une phase, sur la base des première et seconde valeurs déterminées de la tension homopolaire du réseau électrique triphasé (20), ou de la quantité indicative de la tension homopolaire, et des première et seconde valeurs de l'admittance du dispositif de suppression d'arc (10) ; et
   d) ajuster (140) l'admittance du dispositif de suppression d'arc (10) sur la base de l'admittance de réseau symétrique déterminée et de l'admittance d'asymétrie déterminée.

2. Procédé tel que revendiqué dans la revendication 1, comprenant de changer, entre les étapes a) et b), l'admittance du dispositif de suppression d'arc (10) de la première valeur à la seconde valeur en changeant une inductance et/ou une résistance du dispositif de suppression d'arc (10).

3. Procédé tel que revendiqué dans la revendication 1 ou la revendication 2, dans lequel l'étape c) comprend de déterminer l'admittance de réseau symétrique $\overline{Y}_{symm}$ et l'admittance d'asymétrie $\overline{Y}_{asymm}$ selon les équations suivantes :

$$\overline{Y}_{asymm} = \frac{A_1}{A_2 + A_3 + A_4 + A_5},$$

où

$$A_1 = 9. \overline{U}_{01} . \overline{U}_{02} . (\overline{Y}_{Coil1} - \overline{Y}_{Coil2})$$

$$A_2 = U_{PE}.\left(3.\overline{U}_{01}.\overline{Y}_{Coil2}.\bar{Z}_{0Tr} + 9.\overline{U}_{01} + \overline{U}_{01}.\overline{Y}_{Coil1}.\overline{Y}_{Coil2}.\bar{Z}_{0Tr}^{\ 2}\right)$$

$$A_3 = 3.U_{PE}.\overline{U}_{01}.\overline{Y}_{Coil1}.\bar{Z}_{0Tr}$$

$$A_4 = U_{PE}.\left(-3.\overline{U}_{02}.\overline{Y}_{Coil1}.\bar{Z}_{0Tr} - 9.\overline{U}_{02} - \overline{U}_{02}.\overline{Y}_{Coil1}.\overline{Y}_{Coil2}.\bar{Z}_{0Tr}^{\ 2}\right)$$

$$A_5 = -3.U_{PE}.\overline{U}_{02}.\overline{Y}_{Coil2}.\bar{Z}_{0Tr}$$

$$\overline{Y}_{symm} = \frac{B_1 + B_2 + B_3 + B_4 + B_5}{B_6.B_7},$$

où

$$B_1 = -3.U_{PE}.\overline{U}_{01}.\overline{Y}_{Coil1}.\overline{Y}_{Coil2}.\bar{Z}_{0Tr}$$

$$B_2 = 3.U_{PE}.\overline{U}_{02}.\overline{Y}_{Coil1}.\overline{Y}_{Coil2}.\bar{Z}_{0Tr}$$

$$B_3 = -3.(3.\overline{U}_{01}.\overline{U}_{02}.\overline{Y}_{Coil1} + 3.U_{PE}.\overline{U}_{01}.\overline{Y}_{Coil1})$$

$$B_4 = 9.\overline{U}_{01}.\overline{U}_{02}.\overline{Y}_{Coil2}$$

$$B_5 = 9.U_{PE}.\overline{U}_{02}.\overline{Y}_{Coil2}$$

$$B_6 = U_{PE}.(\overline{Y}_{Coil1}.\bar{Z}_{0Tr} + 3)$$

$$B_7 = \overline{U}_{01}.\overline{Y}_{Coil2}.\bar{Z}_{0Tr} - \overline{U}_{02}.\overline{Y}_{Coil2}.\bar{Z}_{0Tr} + 3.\overline{U}_{01} - 3.\overline{U}_{02}$$

où
$\overline{U}_{01}$ est la première valeur de la tension homopolaire, $\overline{U}_{02}$ est la seconde valeur de la tension homopolaire,
$\overline{Y}_{Coil1}$ est la première valeur de l'admittance du dispositif de suppression d'arc,
$\overline{Y}_{Coil2}$ est la seconde valeur de l'admittance du dispositif de suppression d'arc,
$\bar{Z}_{0Tr}$ est une impédance homopolaire entre le dispositif de suppression d'arc et le point neutre du réseau électrique triphasé.

4. Procédé tel que revendiqué dans la revendication 1 ou la revendication 2, dans lequel la quantité indicative de la tension homopolaire est une tension $\overline{U}_{0Coil}$ sur le dispositif de suppression d'arc (10), et dans lequel l'étape c) comprend de déterminer l'admittance de réseau symétrique $\overline{Y}_{symm}$ et l'admittance d'asymétrie $\overline{Y}_{asymm}$ selon les équations suivantes :

$$\overline{Y}_{asymm} = \frac{C_1}{C_2 + C_3},$$

où

$$C_1 = 3.\overline{U}_{0Coil1}.\overline{U}_{0Coil2}.(\overline{Y}_{Coil1} - \overline{Y}_{Coil2})$$

$$C_2 = U_{PE}.(3.\overline{U}_{0Coil1} + \overline{U}_{0Coil1}.\overline{Y}_{Coil1}.\overline{Z}_{0Tr})$$

$$C_3 = U_{PE}.(-3.\overline{U}_{0Coil2} - \overline{U}_{0Coil2}.\overline{Y}_{Coil2}.\overline{Z}_{0Tr})$$

$$\overline{Y}_{symm} = \frac{D_1 + D_2 + D_3}{D_4 + D_5},$$

où

$$D_1 = -3.(\overline{U}_{0Coil1}.\overline{U}_{0Coil2}.\overline{Y}_{Coil1} + U_{PE}.\overline{U}_{0Coil1}.\overline{Y}_{Coil1})$$

$$D_2 = 3.\overline{U}_{0Coil1}.\overline{U}_{0Coil2}.\overline{Y}_{Coil2}$$

$$D_3 = 3.U_{PE}.\overline{U}_{0Coil2}.\overline{Y}_{Coil2}$$

$$D_4 = U_{PE}.(3.\overline{U}_{0Coil1} + \overline{U}_{0Coil1}.\overline{Y}_{Coil1}.\overline{Z}_{0Tr})$$

$$D_5 = U_{PE}.(-3.\overline{U}_{0Coil2} - \overline{U}_{0Coil2}.\overline{Y}_{Coil2}.\overline{Z}_{0Tr})$$

où
$\overline{U}_{0Coil1}$ est la première valeur de la tension sur le dispositif de suppression d'arc,
$\overline{U}_{0Coil2}$ est la seconde valeur de la tension sur le dispositif de suppression d'arc,
$\overline{Y}_{Coil1}$ est la première valeur de l'admittance du dispositif de suppression d'arc,
$\overline{Y}_{Coil2}$ est la seconde valeur de l'admittance du dispositif de suppression d'arc,
$\overline{Z}_{0Tr}$ est une impédance homopolaire entre le dispositif de suppression d'arc et le point neutre du réseau électrique triphasé.

5. Procédé tel que revendiqué dans l'une quelconque des revendications 1 à 4, dans lequel l'étape d) comprend d'ajuster l'admittance du dispositif de suppression d'arc (10) à une valeur qui fournit un degré de compensation prédéterminé.

6. Procédé tel que revendiqué dans la revendication 5, dans lequel l'étape d) comprend d'ajuster l'admittance du dispositif de suppression d'arc (10) à la valeur qui fournit le degré de compensation prédéterminé selon l'équation suivante :

$$B_{coil\_res} = -\frac{1}{\dfrac{1}{B_{symm} + B_{asymm}} - \dfrac{X_{0Tr}}{3}}$$

où :

$B_{coil\_res}$ est une partie imaginaire de l'admittance du dispositif de suppression d'arc à un point de résonance du réseau électrique triphasé,

$B_{symm}$ est une partie imaginaire de l'admittance de réseau symétrique $\overline{Y}_{symm}$ déterminée,

$B_{asymm}$ est une partie imaginaire de l'admittance asymétrique $\overline{Y}_{asymm}$ déterminée,

$X_{0Tr}$ est une réactance homopolaire entre le dispositif de suppression d'arc et le point neutre du réseau électrique triphasé.

**7.** Procédé tel que revendiqué dans la revendication 5 ou la revendication 6, dans lequel l'étape d) comprend, lorsqu'un défaut Phase vers terre est présent dans le réseau électrique triphasé (20), d'ajuster l'admittance du dispositif de suppression d'arc (10) à la valeur qui fournit le degré de compensation prédéterminé selon les équations suivantes en fonction de la phase en défaut :

Défaut Phase A vers terre :

$$B_{coil\_resA} = -\cfrac{1}{\cfrac{1}{B_{symm}} - \cfrac{X_{0Tr}}{3}}$$

Défaut Phase B vers terre :

$$B_{coil\_resB} = -\cfrac{1}{\cfrac{1}{B_{symm} + 1{,}5.\,B_{asymm} - \cfrac{\sqrt{3}}{2}.\,G_{asymm}} - \cfrac{X_{0Tr}}{3}}$$

Défaut Phase C vers terre :

$$B_{coil\_resC} = -\cfrac{1}{\cfrac{1}{B_{symm} + 1{,}5.\,B_{asymm} + \cfrac{\sqrt{3}}{2}.\,G_{asymm}} - \cfrac{X_{0Tr}}{3}}$$

où

$B_{coil\_resA}$ est une partie imaginaire de l'admittance du dispositif de suppression d'arc à un point de résonance du réseau électrique triphasé pendant un défaut Phase A vers terre,

$B_{coil\_resB}$ est une partie imaginaire de l'admittance du dispositif de suppression d'arc à un point de résonance du réseau électrique triphasé pendant un défaut Phase B vers terre,

$B_{coil\_resC}$ est une partie imaginaire de l'admittance du dispositif de suppression d'arc à un point de résonance du réseau électrique triphasé pendant un défaut Phase C vers terre,

$B_{symm}$ est une partie imaginaire de l'admittance de réseau symétrique $\overline{Y}_{symm}$ déterminée,

$B_{asymm}$ est une partie imaginaire de l'admittance asymétrique $\overline{Y}_{asymm}$ déterminée,

$G_{asymm}$ est une partie réelle de l'admittance asymétrique $\overline{Y}_{asymm}$ déterminée,

$X_{0Tr}$ est une réactance homopolaire entre le dispositif de suppression d'arc et le point neutre du réseau électrique triphasé.

**8.** Produit programme informatique comprenant un code de programme informatique, dans lequel l'exécution du code de programme dans un ordinateur amène l'ordinateur à exécuter les étapes du procédé selon l'une quelconque des revendications 1 à 7.

**9.** Appareil pour commander un dispositif de suppression d'arc d'un réseau électrique triphasé, lequel dispositif de suppression d'arc (10) a une admittance ajustable et est connecté entre un point neutre (21) du réseau électrique triphasé (20) et la terre ; l'appareil comprenant :

des moyens configurés pour déterminer une première valeur d'une tension homopolaire du réseau électrique triphasé (20), ou d'une quantité indicative de la tension homopolaire, lorsqu'une admittance du dispositif de suppression d'arc (10) a une première valeur ;

des moyens configurés pour déterminer une seconde valeur de la tension homopolaire du réseau électrique triphasé (20), ou de la quantité indicative de la tension homopolaire, lorsque l'admittance du dispositif de suppression d'arc (10) a une seconde valeur ;

des moyens configurés pour déterminer une admittance de réseau symétrique, qui représente une somme des admittances symétriques Phase vers terre du réseau électrique triphasé (20), et une admittance d'asymétrie, qui représente une asymétrie des admittances Phase vers terre du réseau électrique triphasé (20) concentrées dans une phase, sur la base des première et seconde valeurs déterminées de la tension homopolaire du réseau électrique triphasé (20), ou de la quantité indicative de la tension homopolaire, et des première et seconde valeurs de l'admittance du dispositif de suppression d'arc (10) ; et

des moyens configurés pour ajuster l'admittance du dispositif de suppression d'arc (10) sur la base de l'admittance de réseau symétrique déterminée et de l'admittance d'asymétrie déterminée.

10. Appareil tel que revendiqué dans la revendication 9, comprenant des moyens configurés pour changer l'admittance du dispositif de suppression d'arc (10) de la première valeur à la seconde valeur en changeant une inductance et/ou une résistance du dispositif de suppression d'arc (10).

11. Appareil tel que revendiqué dans la revendication 9 ou la revendication 10, dans lequel les moyens configurés pour déterminer l'admittance de réseau symétrique $\overline{Y}_{symm}$ et l'admittance d'asymétrie $\overline{Y}_{asymm}$ sont configurés pour effectuer la détermination selon les équations suivantes :

$$\overline{Y}_{asymm} = \frac{A_1}{A_2+A_3+A_4+A_5},$$

où

$$A_1 = 9.\overline{U}_{01}.\overline{U}_{02}.(\overline{Y}_{Coil1} - \overline{Y}_{Coil2})$$

$$A_2 = U_{PE}.\left(3.\overline{U}_{01}.\overline{Y}_{Coil2}.\overline{Z}_{0Tr} + 9.\overline{U}_{01} + \overline{U}_{01}.\overline{Y}_{Coil1}.\overline{Y}_{Coil2}.\overline{Z}_{0Tr}^{2}\right)$$

$$A_3 = 3.U_{PE}.\overline{U}_{01}.\overline{Y}_{Coil1}.\overline{Z}_{0Tr}$$

$$A_4 = U_{PE}.\left(-3.\overline{U}_{02}.\overline{Y}_{Coil1}.\overline{Z}_{0Tr} - 9.\overline{U}_{02} - \overline{U}_{02}.\overline{Y}_{Coil1}.\overline{Y}_{Coil2}.\overline{Z}_{0Tr}^{2}\right)$$

$$A_5 = -3.U_{PE}.\overline{U}_{02}.\overline{Y}_{Coil2}.\overline{Z}_{0Tr}$$

$$\overline{Y}_{symm} = \frac{B_1+B_2+B_3+B_4+B_5}{B_6.B_7},$$

où

$$B_1 = -3.U_{PE}.\overline{U}_{01}.\overline{Y}_{Coil1}.\overline{Y}_{Coil2}.\overline{Z}_{0Tr}$$

$$B_2 = 3.U_{PE}.\overline{U}_{02}.\overline{Y}_{Coil1}.\overline{Y}_{Coil2}.\overline{Z}_{0Tr}$$

$$B_3 = -3.(3.\overline{U}_{01}.\overline{U}_{02}.\overline{Y}_{Coil1} + 3.U_{PE}.\overline{U}_{01}.\overline{Y}_{Coil1})$$

$$B_4 = 9.\overline{U}_{01}.\overline{U}_{02}.\overline{Y}_{Coil2}$$

$$B_5 = 9.U_{PE}.\overline{U}_{02}.\overline{Y}_{Coil2}$$

$$B_6 = U_{PE}.(\overline{Y}_{Coil1}.\bar{Z}_{0Tr} + 3)$$

$$B_7 = \overline{U}_{01}.\overline{Y}_{Coil2}.\bar{Z}_{0Tr} - \overline{U}_{02}.\overline{Y}_{Coil2}.\bar{Z}_{0Tr} + 3.\overline{U}_{01} - 3.\overline{U}_{02}$$

où
$\overline{U}_{01}$ est la première valeur de la tension homopolaire,
$\overline{U}_{02}$ est la seconde valeur de la tension homopolaire,
$\overline{Y}_{Coil1}$ est la première valeur de l'admittance du dispositif de suppression d'arc,
$\overline{Y}_{Coil2}$ est la seconde valeur de l'admittance du dispositif de suppression d'arc,
$\bar{Z}_{0Tr}$ est une impédance homopolaire entre le dispositif de suppression d'arc et le point neutre du réseau électrique triphasé.

12. Appareil tel que revendiqué dans la revendication 9 ou la revendication 10, dans lequel la quantité indicative de la tension homopolaire est une tension $\overline{U}_{0Coil}$ sur le dispositif de suppression d'arc (10), et dans lequel les moyens configurés pour déterminer l'admittance de réseau symétrique $\overline{Y}_{symm}$ et l'admittance d'asymétrie $\overline{Y}_{asymm}$ sont configurés pour effectuer la détermination selon les équations suivantes :

$$\overline{Y}_{asymm} = \frac{C_1}{C_2 + C_3},$$

où

$$C_1 = 3.\overline{U}_{0Coil1}.\overline{U}_{0Coil2}.(\overline{Y}_{Coil1} - \overline{Y}_{Coil2})$$

$$C_2 = U_{PE}.(3.\overline{U}_{0Coil1} + \overline{U}_{0Coil1}.\overline{Y}_{Coil1}.\bar{Z}_{0Tr})$$

$$C_3 = U_{PE}.(-3.\overline{U}_{0Coil2} - \overline{U}_{0Coil2}.\overline{Y}_{Coil2}.\bar{Z}_{0Tr})$$

$$\overline{Y}_{symm} = \frac{D_1 + D_2 + D_3}{D_4 + D_5},$$

où

$$D_1 = -3.(\overline{U}_{0Coil1}.\overline{U}_{0Coil2}.\overline{Y}_{Coil1} + U_{PE}.\overline{U}_{0Coil1}.\overline{Y}_{Coil1})$$

$$D_2 = 3.\overline{U}_{0Coil1}.\overline{U}_{0Coil2}.\overline{Y}_{Coil2}$$

$$D_3 = 3.U_{PE}.\overline{U}_{0Coil2}.\overline{Y}_{Coil2}$$

$$D_4 = U_{PE}.(3.\overline{U}_{0Coil1} + \overline{U}_{0Coil1}.\overline{Y}_{Coil1}.\overline{Z}_{0Tr})$$

$$D_5 = U_{PE}.(-3.\overline{U}_{0Coil2} - \overline{U}_{0Coil2}.\overline{Y}_{Coil2}.\overline{Z}_{0Tr})$$

où

$\overline{U}_{0Coil1}$ est la première valeur de la tension sur le dispositif de suppression d'arc,

$\overline{U}_{0Coil2}$ est la seconde valeur de la tension sur le dispositif de suppression d'arc,

$\overline{Y}_{Coil1}$ est la première valeur de l'admittance du dispositif de suppression d'arc,

$\overline{Y}_{Coil2}$ est la seconde valeur de l'admittance du dispositif de suppression d'arc,

$\overline{Z}_{0Tr}$ est une impédance homopolaire entre le dispositif de suppression d'arc et le point neutre du réseau électrique triphasé.

13. Appareil tel que revendiqué dans l'une quelconque des revendications 9 à 12, dans lequel les moyens configurés pour ajuster l'admittance du dispositif de suppression d'arc (10) sont configurés pour ajuster l'admittance du dispositif de suppression d'arc (10) à une valeur qui fournit un degré de compensation prédéterminé.

14. Appareil tel que revendiqué dans la revendication 13, dans lequel les moyens configurés pour ajuster l'admittance du dispositif de suppression d'arc (10) sont configurés pour ajuster l'admittance du dispositif de suppression d'arc (10) à la valeur qui fournit le degré de compensation prédéterminé selon l'équation suivante :

$$B_{coil\_res} = -\frac{1}{\dfrac{1}{B_{symm} + B_{asymm}} - \dfrac{X_{0Tr}}{3}}$$

où :

$B_{coil\_res}$ est une partie imaginaire de l'admittance du dispositif de suppression d'arc à un point de résonance du réseau électrique triphasé,

$B_{symm}$ est une partie imaginaire de l'admittance de réseau symétrique $\overline{Y}_{symm}$ déterminée,

$B_{asymm}$ est une partie imaginaire de l'admittance asymétrique $\overline{Y}_{asymm}$ déterminée,

$X_{0Tr}$ est une réactance homopolaire entre le dispositif de suppression d'arc et le point neutre du réseau électrique triphasé.

15. Appareil tel que revendiqué dans la revendication 13 ou la revendication 14, dans lequel les moyens configurés pour ajuster l'admittance du dispositif de suppression d'arc (10) sont configurés pour, lorsqu'un défaut Phase vers terre est présent dans le réseau électrique triphasé (20), ajuster l'admittance du dispositif de suppression d'arc (10) à la valeur qui fournit le degré de compensation prédéterminé selon les équations suivantes en fonction de la phase en défaut :

Défaut Phase A vers terre :

$$B_{coil\_resA} = -\frac{1}{\dfrac{1}{B_{symm}} - \dfrac{X_{0Tr}}{3}}$$

Défaut Phase B vers terre :

$$B_{coil\_resB} = -\cfrac{1}{\cfrac{1}{B_{symm} + 1{,}5.\,B_{asymm} - \cfrac{\sqrt{3}}{2}.\,G_{asymm}} - \cfrac{X_{0Tr}}{3}}$$

Défaut Phase C vers terre :

$$B_{coil\_resC} = -\cfrac{1}{\cfrac{1}{B_{symm} + 1{,}5.\,B_{asymm} + \cfrac{\sqrt{3}}{2}.\,G_{asymm}} - \cfrac{X_{0Tr}}{3}}$$

où

$B_{coil\_resA}$ est une partie imaginaire de l'admittance du dispositif de suppression d'arc à un point de résonance du réseau électrique triphasé pendant un défaut Phase A vers terre,

$B_{coil\_resB}$ est une partie imaginaire de l'admittance du dispositif de suppression d'arc à un point de résonance du réseau électrique triphasé pendant un défaut Phase B vers terre,

$\boldsymbol{B_{coil\_resC}}$ est une partie imaginaire de l'admittance du dispositif de suppression d'arc à un point de résonance du réseau électrique triphasé pendant un défaut Phase C vers terre,

$\boldsymbol{B_{symm}}$ est une partie imaginaire de l'admittance de réseau symétrique $\overline{\boldsymbol{Y}}_{\boldsymbol{symm}}$ déterminée,

$\boldsymbol{B_{asymm}}$ est une partie imaginaire de l'admittance asymétrique $\overline{\boldsymbol{Y}}_{\boldsymbol{asymm}}$ déterminée,

$\boldsymbol{G_{asymm}}$ est une partie réelle de l'admittance asymétrique $\overline{\boldsymbol{Y}}_{\boldsymbol{asymm}}$ déterminée,

$X_{0Tr}$ est une réactance homopolaire entre le dispositif de suppression d'arc et le point neutre du réseau électrique triphasé.

16. Dispositif de suppression d'arc pour un réseau électrique triphasé, le dispositif de suppression d'arc (10) ayant une admittance ajustable et étant configuré pour être connecté entre un point neutre (21) du réseau électrique triphasé (20) et la terre, et comprenant un appareil tel que revendiqué dans l'une quelconque des revendications 9 à 15.

Fig. 1

Fig. 2

Determining a first value of a zero sequence voltage of the three phase electric network, or a quantity indicative thereof

110

Determining a second value of the zero sequence voltage of the three phase electric network, or the quantity indicative thereof

120

Determining a symmetrical network admittance and an asymmetry admittance

130

Adjusting the admittance of the arc suppression device

140

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1537371 A
- EP 1870717 A
- WO 2016029890 A
- WO 9634293 A

**Non-patent literature cited in the description**

- **DRUML, G. ; KUGI, A. ; PARR, B.** Control of Petersen Coils. *International Symposium on Theoretical Electrical Engineering,* August 2001, vol. XI